# EUROPEAN PATENT APPLICATION

(11) **EP 4 834 989 A1**
(43) Date of publication of application: **04.11.2026**
(21) Application number: 24912557.6
(22) Date of filing: 18.12.2024
(51) Int. Cl.: C08L 15/00, C08K 3/04, C08K 3/22, H01M 4/02, H01M 4/04, H01M 4/13, H01M 4/62, H01M 4/139

(54) **RESIN COMPOSITION, CARBON MATERIAL DISPERSION COMPOSITION, MIXTURE SLURRY, ELECTRODE FILM, SECONDARY BATTERY, AND VEHICLE**

(30) Priority: 27.12.2023 JP 2023221779
(71) Applicant: Artience Co., Ltd., Chuo-ku Tokyo 104-8377 (JP); TOYOCOLOR CO., LTD., Tokyo 104-8381 (JP)
(72) Inventor: MORITA Yu, Tokyo 104-8381 (JP); FUKAGAWA Soichiro, Tokyo 104-8381 (JP)
(74) Representative: Berggren Oy
(86) International application number: PCT/JP2024/044712
(87) International publication number: WO 2025/142668

(57) **Abstract**

Provided is a resin composition containing a copolymer (X) having an alkylene structural unit and a nitrile group-containing structural unit, and an alkali metal. The content of the alkali metal is 50 ppm or more and less than 10,000 ppm. The resin composition has a resistivity of 5,000 Ω·cm or more and 25,000 Ω·cm or less when a non-volatile content is 8 mass% with N-methyl-2-pyrrolidone.

## Description

### Technical Field

The present disclosure relates to a resin composition and a carbon material dispersion composition. More specifically, the present disclosure relates to a carbon material dispersion composition containing the resin composition and a carbon material, a mixture slurry containing the carbon material dispersion composition and an active material, an electrode film formed by coating these, a secondary battery containing an electrode having the electrode film and an electrolyte, and a vehicle containing the secondary battery.

### Background Art

With the spread of electric vehicles and miniaturization, weight reduction and performance improvement of portable devices, there are demands to provide secondary batteries with high energy densities and to increase the capacity of such secondary batteries. In view of this, nonaqueous electrolyte secondary batteries using a nonaqueous electrolytic solution, particularly, lithium ion secondary batteries, have come to be used in many devices because of their high energy density and high voltage.

As a negative electrode material used in these lithium ion secondary batteries, a carbon material represented by graphite, which has a base potential close to that of lithium (Li) and has a large charging and discharging capacity per unit mass, is used. However, these electrode materials are used with the charging and discharging capacity per mass close to the theoretical value, and the energy density per mass of the battery is approaching its limit. Therefore, in order to increase the utilization rate of the electrode, studies have been conducted to reduce the amount of conductivity aids and binders that do not contribute to the discharging capacity.

The conductivity aids serve to form conductive pathways within the electrode, and it is required that these pathways be resistant to breakage caused by expansion and contraction of the electrode film. To maintain the conductive pathways with a small amount of conductive aids, it is effective to use carbon materials with a large specific surface area, particularly carbon nanotubes (CNTs), which are a type of nanocarbon. However, since carbon materials with a large specific surface area have strong cohesive forces, there has been a problem in achieving uniform dispersion in mixture slurries and electrode films.

According to this background, many methods have been proposed to produce carbon material dispersion compositions using various dispersants and to manufacture mixture slurries via the carbon material dispersion compositions.

For example, Patent Literatures 1 and 2 propose carbon material dispersion compositions in which dispersibility is improved by adding a basic compound together with a polymer-based dispersant such as polyvinylpyrrolidone or hydrogenated nitrile rubber. However, while these dispersants can produce a carbon material dispersion composition in a good dispersion state, there were cases where the dispersion state of the carbon material deteriorates during the process of forming the electrode film, leading to a decline in conductivity.

Patent Literatures 3 and 4 propose that good dispersion of the carbon material in the mixture slurry can be achieved by using an electrode binder composition containing hydrogenated nitrile rubber with a predetermined Mooney viscosity (ML₁₊₄, 100°C). Patent Literature 5 proposes the use of a dispersant composition containing hydrogenated nitrile rubber with a weight-average molecular weight of 190,000 to 210,000 g/mol. However, these dispersants had low dispersibility, making it difficult to disperse carbon materials with a large specific surface area at high concentrations.

Therefore, Patent Literature 6 proposes a technique to use a copolymer having specific structural units and molecular weight as a dispersant to achieve good dispersion of carbon materials in a solvent and to maintain a good dispersion state during the adjustment of the mixture slurry and the production of the electrode film. However, to obtain a specific structure, it is necessary to add a large amount of base, which raises issues such as a decrease in the molecular weight of the dispersant and/or degradation of the binder resin, leading to a reduction in electrode strength.

### Citation List

### Patent Literature

Patent Literature 1: Japanese Patent Laid-Open No. 2014-181140
Patent Literature 2: Korean Registered Patent No. 10-1831562
Patent Literature 3: Japanese Patent No. 6848862
Patent Literature 4: Japanese Patent No. 6863278
Patent Literature 5: National Publication of International Patent Application No. 2022-536304
Patent Literature 6: Japanese Patent Laid-Open No. 2021-122751

### Summary of Invention

### Technical Problem

Therefore, an object of the present disclosure is to provide a resin composition and a carbon material dispersion composition that can achieve both good dispersibility and good electrode characteristics. A further object of the present disclosure is to provide a mixture slurry capable of forming an electrode film with high conductivity and strong adhesion, and more specifically, to provide a secondary battery having excellent rate characteristics and cycle characteristics, and a vehicle equipped with the secondary battery that offers enhanced safety and improved fuel efficiency.

### Solution to Problem

The inventors of the present invention have diligently studied to achieve the above objects. The present inventors have found that the above objects can be achieved by a resin composition containing a copolymer (X) with a specific structure and containing an alkali metal in an amount of 50 ppm or more and less than 10,000 ppm, where the resistivity when a non-volatile content is 8 mass% with N-methyl-2-pyrrolidone is within a specific range.

That is, the present disclosure includes the following embodiments. The embodiments of the present disclosure are not limited to the following.
[1] A resin composition, containing:
   a copolymer (X) having an alkylene structural unit and a nitrile group-containing structural unit; and an alkali metal,
   wherein a content of the alkali metal is 50 ppm or more and less than 10,000 ppm, and
   the resin composition has a resistivity of 5,000 Ω·cm or more and 25,000 Ω·cm or less when a non-volatile content is 8 mass% with N-methyl-2-pyrrolidone.
[2] The resin composition according to [1], wherein the Z-average molecular weight of the copolymer (X) is 20,000 or more and 200,000 or less.
[3] The resin composition according to [1] or [2], wherein a ratio (Mz/Mw) of a Z-average molecular weight (Mz) to a weight-average molecular weight (Mw) of the copolymer (X) is 2.0 or less.
[4] A carbon material dispersion composition containing the resin composition according to any one of [1] to [3] and a carbon material.
[5] A mixture slurry containing the carbon material dispersion composition according to [4] and an active material.
[6] An electrode film formed by coating the mixture slurry according to [5].
[7] A secondary battery containing an electrode having the electrode film according to [6] and an electrolyte.
[8] A vehicle containing the secondary battery according to [7].

### Advantageous Effects of Invention

The resin composition of the present disclosure has excellent dispersibility of the material to be dispersed, such as a carbon material, and by using a carbon material dispersion composition containing this resin composition, an electrode film with excellent conductivity and adhesion can be obtained. In addition, a secondary battery having excellent rate characteristics and cycle characteristics can be obtained. Thus, it can be suitably used in vehicle applications such as hybrid vehicles, plug-in hybrid vehicles, and electric vehicles, where high capacity, high output, and high durability are required for the mounted secondary battery.

### Description of Embodiments

Hereinafter, the resin composition, carbon material dispersion composition, mixture slurry, electrode film, and secondary battery of the present disclosure will be described in detail, but the present disclosure is not limited thereto. The numerical values specified in the present specification are values obtained by the methods disclosed in the embodiments or examples.

In the present specification, the numerical range specified using "to" is to be understood as including the values before and after "to" as the lower and upper limits of the range.

In the present specification, "N-methyl-2-pyrrolidone" may be referred to as "NMP", "carbon black" as "CB", "carbon nanotube" as "CNT", and "carbon material dispersion composition" as "dispersion composition".

The non-volatile content refers to the solid content excluding the solvent, and is determined by measuring the amount of residue remaining after heating the resin composition above the boiling point of the solvent, which has volatilized or evaporated.

The resin composition of the embodiment of the present disclosure refers to the state before the addition of carbon materials and electrode active materials, and the carbon material dispersion composition refers to the state before the addition of electrode active materials. In this regard, the resin composition and the carbon material dispersion composition are distinguished from the mixture slurry containing the electrode active material.

Moreover, this concept excludes the state in which carbon materials and electrode active materials are intentionally added to the resin composition, and based on 100 mass% of the non-volatile content of the resin composition, the carbon material and the electrode active material may be 1 mass% or less, 0.5 mass% or less, or 0.1 mass% or less, or may be 0 mass%.

Moreover, this is a concept excluding the state where the electrode active material is intentionally added to the carbon material dispersion composition, and based on 100 mass% of the non-volatile content of the carbon material dispersion composition, the electrode active material may be 1 mass% or less, 0.5 mass% or less, or 0.1 mass% or less, or may be 0 mass%.

Unless otherwise noted, each component mentioned in the present specification may be used independently alone or two or more thereof may be used in combination.

The numerical values specified in the present specification are values obtained by the methods disclosed in the embodiments or examples.

### <<Resin Composition>>

The resin composition of the present embodiment contains a copolymer (X) having at least an alkylene structural unit and a nitrile group-containing structural unit and an alkali metal.

Furthermore, the content of the alkali metal is 50 ppm or more and less than 10,000 ppm, and the resin composition has a resistivity of 5,000 Ω·cm or more and 25,000 Ω·cm or less when a non-volatile content is 8 mass% with N-methyl-2-pyrrolidone.

By being such a resin composition, a dispersion composition having excellent dispersibility of the material to be dispersed and good stability can be obtained.

In particular, when the material to be dispersed is a carbon material, a carbon material dispersion composition with excellent dispersibility and oxidation resistance can be obtained, and since the conductivity is also excellent, secondary batteries using this can have excellent rate characteristics and high-temperature cycle characteristics.

As the material to be dispersed, in addition to the carbon materials described later, conventional inorganic pigments, organic pigments, etc. can be used, but it can be particularly effectively used for carbon materials.

Examples of the inorganic pigments include metal powders of gold, silver, copper, silver-plated copper powder, silver-copper composite powder, silver-copper alloy, amorphous copper, nickel, chromium, palladium, rhodium, ruthenium, indium, silicon, aluminum, tungsten, molybdenum, platinum, and the like; inorganic powders coated with these metals, powders of metal oxides such as silver oxide, indium oxide, tin oxide, zinc oxide, ruthenium oxide, and the like; inorganic powders coated with these metal oxides, and carbon nanotubes, carbon black, graphite, and the like.

Examples of the organic pigments include various pigments used in inks, and the like. Examples of such pigments include soluble azo pigments, insoluble azo pigments, phthalocyanine pigments, quinacridone pigments, isoindolinone pigments, isoindoline pigments, perylene pigments, perinone pigments, dioxazine pigments, anthraquinone pigments, dianthraquinone pigments, anthrapyrimidine pigments, anthanthrone pigments, indanthrone pigments, flavanthrone pigments, pyranthrone pigments, and diketopyrrolopyrrole pigments.

The resistivity of the resin composition of the present disclosure, when made to have a non-volatile content of 8 mass% by N-methyl-2-pyrrolidone, is 5,000 Ω·cm or more and 25,000 Ω·cm or less.

By being such a resin composition, good dispersibility and good electrode characteristics can be achieved simultaneously.

The resistivity measurement can be performed by first measuring the non-volatile content of the resin composition, adding N-methyl-2-pyrrolidone to achieve a non-volatile content of 8 mass%, mixing, and preparing a sample for liquid resistivity measurement.

The resistivity can be measured by the method described in the examples.

From the perspective of balancing the dispersibility of the material to be dispersed and the electrode resistance, the resistivity is preferably 5,000 Ω·cm or more and 20,000 Ω·cm or less, and more preferably 7,000 Ω·cm or more and 15,000 Ω·cm or less.

The resistivity of the resin composition can be adjusted by modifying the copolymer with a basic compound such as an alkali metal compound or by applying shear stress to the copolymer, thereby controlling the molecular weight, molecular weight distribution, ion concentration, or the like of the copolymer.

The modification of the copolymer in the present specification includes not only the modification of a part of the structural units possessed by the copolymer due to hydrolysis, or the like, but also changes in the viscoelasticity and molecular weight of the copolymer.

The initial viscosity of the resin composition of the present embodiment is preferably such that the viscosity measured at 100 rpm and 25°C using a B-type viscometer is 10 mPa·s or more and 2,000 mPa·s or less, more preferably 100 mPa·s or more and 1,000 mPa·s or less, and still more preferably 100 mPa·s or more and 500 mPa·s or less. As long as it is within the above range, the resin composition can be made to have excellent stability.

Furthermore, when the resin composition contains an alkali metal compound, the precipitation of the alkali metal compound is suppressed, resulting in superior stability.

### (Copolymer (X))

The copolymer (X) is a copolymer having an alkylene structural unit and a nitrile group-containing structural unit. This copolymer may have other structural units as well.

From the perspective of the dispersibility of the material to be dispersed, based on 100 mass% of copolymer (X), the total content of alkylene structural units and nitrile group-containing structural units is preferably 50 mass% or more and 100 mass% or less, and more preferably 80 mass% or more.

When the copolymer (X) is a modified copolymer, from the perspective of the dispersibility of the material to be dispersed, based on 100 mass% of the copolymer (X), the total content of alkylene structural units and nitrile group-containing structural units is preferably 50 mass% or more and 100 mass% or less. When the nitrile group-containing structural unit is modified by hydrolysis, the total content is preferably 50 mass% or more and 97 mass% or less, and more preferably 80 mass% or more and 95 mass% or less. The content of other structural units is preferably 10 mass% or less, more preferably 5 mass% or less, and still more preferably 3 mass% or less.

When the nitrile group-containing structural unit is modified and the copolymer (X) has an amide group-containing structural unit, the content of the amide group-containing structural unit is preferably 5 mass% or less, and more preferably 3 mass% or less, based on 100 mass% of the copolymer (X). When the content of the amide group-containing structural unit increases, dissolution of the copolymer in the electrolyte may cause an increase in the viscosity of the electrolyte and a significant decrease in the ionic conductivity.

The modification of the copolymer (X) is preferably controlled only in terms of properties such as molecular weight or viscoelasticity while maintaining the composition by adjusting the addition amount of basic compounds such as alkali metal compounds.

A structural unit is a state in which a monomer is incorporated into a polymer after polymerization, and the content of structural units formed by polymerizing monomers usually corresponds to the ratio of the monomer with respect to the all monomers used in the polymerization of that polymer (charge ratio), unless otherwise specified. That is, the content of each monomer based on the total of all monomers is taken as the content of each structural unit.

The copolymer (X) may be a copolymer modified by the addition of a basic compound such as an alkali metal compound. When the nitrile groups contained in the nitrile group-containing structural unit of the copolymer are modified by hydrolysis or the like due to modification, it is preferable that the contents of alkylene structural units and nitrile group-containing structural units in the modified copolymer (X) are within the above range.

The contents of alkylene structural units and nitrile group-containing structural units can be calculated by IR measurement. For example, it can be calculated using the method described in ISO 14558:2016. It can also be measured by the ATR method without using the KBr tablet method. By using the above method, it is possible to identify the structural units and their content even for copolymer (X) that has been modified by a basic compound.

The number-average molecular weight (Mn) of the copolymer (X) of the present embodiment is preferably 70,000 or less, more preferably 50,000 or less, and still more preferably 30,000 or less. It is preferable that it is more than 10,000.

When the number-average molecular weight (Mn) of the copolymer (X) is within the above range, the adsorption of the copolymer onto the material to be dispersed is likely to proceed, and the wettability of the material to be dispersed to the solvent is likely to improve.

The weight-average molecular weight (Mw) of the copolymer (X) of the present embodiment is preferably 20,000 or more and 180,000 or less, more preferably 20,000 or more and 150,000 or less, and still more preferably 20,000 or more and 100,000 or less.

The Z-average molecular weight (Mz) of the copolymer (X) of the present embodiment is preferably 20,000 or more and 250,000 or less, more preferably 20,000 or more and 200,000 or less, still more preferably 25,000 or more and 180,000 or less, and particularly preferably 30,000 or more and 100,000 or less.

When the weight-average molecular weight (Mw) and Z-average molecular weight (Mz) of the copolymer (X) are within the above range, not only is dispersion likely to proceed when including a material to be dispersed such as carbon materials in the resin composition, but the viscosity of the resin composition is also reduced. Furthermore, this can improve the efficiency of removing metallic foreign particles contained in the resin composition using a filter and a magnet.

The number-average molecular weight (Mn), weight-average molecular weight (Mw), and Z-average molecular weight (Mz) are expressed as polystyrene equivalent values, and can be measured by gel permeation chromatography (GPC).

The Z-average molecular weight is a weighted average that uses the square of the molecular weight as the weighting factor, and therefore is a value that is likely to be strongly influenced by high-molecular-weight components. The copolymer (X) has a molecular weight distribution, and the low molecular weight component functions to improve the wettability of the material to be dispersed. Additionally, the high molecular weight component functions to improve the viscosity stability of the material to be dispersed, the oxidation resistance of the copolymer, and the battery characteristics such as electrolyte dissolution resistance.

By controlling the Z-average molecular weight of the copolymer (X) within the above range before adding material to be dispersed such as carbon materials to the resin composition, the viscosity of the resin composition can be lowered, and the material to be dispersed becomes easier to wet, facilitating dispersion.

Moreover, since the viscosity of the carbon material dispersion composition described later becomes low, when using a dispersion machine with media such as a bead mill, the dispersion media move well. Since the kinetic energy of the dispersion medium is proportional to the mass of the dispersion medium and to the square of its velocity, by efficiently moving the dispersion media in the carbon material dispersion composition, not only can the desired dispersion degree be adjusted, but also a homogeneous carbon material dispersion composition with excellent long-term stability and conductivity can be obtained.

The Z-average molecular weight (Mz) of the copolymer (X) can be controlled by the synthesis conditions of the copolymer (X) (composition, blending amount, catalyst, reaction temperature, reaction time, and the like), by modifying the copolymer, by applying shear stress to the copolymer, and the like. Shear stress can be applied, for example, using rolls, kneaders, or the like, to reduce the Z-average molecular weight by applying mechanical shear stress.

The polydispersity index (Mw/Mn) of the copolymer (X) of the present embodiment is preferably 2.2 or less, more preferably 2.0 or less, and still more preferably 1.8 or less. Additionally, the polydispersity index (Mw/Mn) is preferably 1.2 or more.

When the polydispersity index (Mw/Mn) is within the above range, the ratio of the low molecular weight components contained in the copolymer (X) is appropriate, and particularly when dispersing carbon materials, the wettability of the material to be dispersed proceeds quickly, making dispersion easier, allowing for the production of a carbon material dispersion composition while maintaining the structure of the carbon material, resulting in electrode films and secondary batteries with high conductivity and adhesion.

The ratio (Mz/Mw) of the weight-average molecular weight (Mw) and the Z-average molecular weight (Mz) of the copolymer (X) is preferably 2.2 or less, more preferably 2.0 or less, still more preferably 1.9 or less, and particularly preferably 1.8 or less. Additionally, the ratio is preferably 1.5 or more, and more preferably 1.6 or more.

When the ratio (Mz/Mw) of the weight-average molecular weight (Mw) and the Z-average molecular weight (Mz) is within the above range, the ratio of the high molecular weight components contained in the copolymer (X) is appropriate, making it easier to obtain a dispersion composition with good dispersion stability of the material to be dispersed.

The number-average molecular weight (Mn), weight-average molecular weight (Mw), and Z-average molecular weight (Mz) of the copolymer (X) can be adjusted, for example, by high-pressure dispersion of the copolymer and an amide-based polar solvent. It is also possible by high-pressure dispersion of a resin composition containing an amide-based polar solvent.

For high-pressure dispersion, a device such as the "Starburst" manufactured by Sugino Machine Limited can be used.

Among them, it is preferable to adjust the number-average molecular weight (Mn) by high-pressure dispersion of the copolymer and an amide-based polar solvent in the presence of an alkali metal.

### [Alkylene structural unit]

The alkylene structural unit is a structural unit including an alkylene structure and is preferably a structural unit only consisting of an alkylene structure. The alkylene structure is preferably a linear alkylene structure or a branched alkylene structure.

However, the structural units that have a nitrile group are excluded.

The alkylene structural unit preferably includes a structural unit represented by the following general formula (1A).

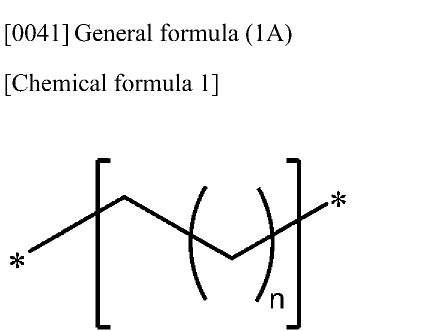

In general formula (1A), n represents an integer of 1 or more. n is preferably an integer of 2 or more, and more preferably an integer of 3 or more. n is preferably an integer of 5 or less, and more preferably an integer of 4 or less. In particular, n is preferably 3.

The alkylene structural unit preferably includes a structural unit represented by the following general formula (1B).

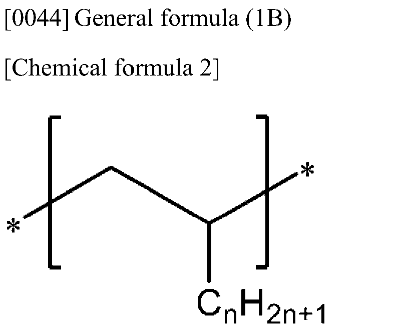

In general formula (1B), n represents an integer of 1 or more. n is preferably an integer of 4 or less, more preferably an integer of 3 or less, and further preferably an integer of 2 or less. In particular, n is preferably 2.

The method of introducing the alkylene structural unit into the copolymer is not particularly limited and may include, for example, the following method (1a) or (1b).

In the method (1a), the copolymer is prepared by a polymerization reaction using a monomer composition containing a conjugated diene monomer. The prepared copolymer includes a monomer unit derived from the conjugated diene monomer. In the present disclosure, the "monomer unit derived from the conjugated diene monomer" may be referred to as the "conjugated diene monomer unit", and the same may apply to the monomer units derived from other monomers. Subsequently, at least a part of the conjugated diene monomer unit is converted into an alkylene structural unit by hydrogenating the conjugated diene monomer unit. Hereinafter, "hydrogen addiction" may be referred to as "hydrogenation". The finally obtained copolymer includes the hydrogenated unit of the conjugated diene monomer unit as the alkylene structural unit.

Moreover, the conjugated diene monomer unit includes at least a monomer unit having one carbon-carbon double bond. For example, a 1,3-butadiene monomer unit being a conjugated diene monomer unit includes at least one monomer unit selected from the group consisting of a monomer unit having a cis-1,4 structure, a monomer unit having a trans-1,4 structure, and a monomer unit having a 1,2 structure, and may also include two or more monomer units. In addition, the conjugated diene monomer unit may further include a monomer unit having no carbon-carbon double bond and having a branch point. In the present specification, the "branch point" refers to a branch point in a branched polymer, and when the conjugated diene monomer unit includes a monomer unit including a branch point, the above-prepared copolymer and copolymer are branched polymers.

In the method (1b), the copolymer is prepared by a polymerization reaction using a monomer composition including an α-olefin monomer. The prepared copolymer includes an α-olefin monomer unit. The finally obtained copolymer includes the α-olefin monomer unit as the alkylene structural unit.

Of these methods, the method (1a) is preferable because the copolymer can be easily produced. The carbon number of the conjugated diene monomer is 4 or more, and preferably 4 or more and 6 or less. The conjugated diene monomer may be a conjugated diene compound such as 1,3-butadiene, isoprene, 2,3-dimethyl-1,3-butadiene and 1,3-pentadiene. In particular, 1,3-butadiene is preferable. The alkylene structural unit preferably includes a structural unit obtained by hydrogenating the conjugated diene monomer unit (a hydrogenated conjugated diene monomer unit), and more preferably includes a structural unit obtained by hydrogenating the 1,3-butadiene monomer unit (a hydrogenated 1,3-butadiene monomer unit). The conjugated diene monomer can be used alone or in combination of two or more.

The hydrogenation is preferably a method capable of selectively hydrogenating the conjugated diene monomer unit.

The hydrogenation methods include known methods such as oil layer hydrogenation or aqueous layer hydrogenation.

The hydrogenation can be performed in the usual way. The hydrogenation can be performed, for example, by dissolving a copolymer having a conjugated diene monomer unit in a suitable solvent and treating the solution with hydrogen gas in the presence of a hydrogenation catalyst. The hydrogenation catalyst includes nickel, palladium, rhodium, platinum, copper, and the like.

In the method (1b), the carbon number of the α-olefin monomer is 2 or more, preferably 3 or more, and more preferably 4 or more. The carbon number of the α-olefin monomer is preferably 6 or less, and more preferably 5 or less. The α-olefin monomer may be, for example, an α-olefin compound such as ethylene, propylene, 1-butene and 1-hexene. The α-olefin monomer can be used alone or in combination of two or more.

The alkylene structural unit preferably includes at least one structural unit selected from the group consisting of a structural unit including a linear alkylene structure and a structural unit including a branched alkylene structure, more preferably includes at least one structural unit selected from the group consisting of a structural unit only consisting of a linear alkylene structure and a structural unit only consisting of a branched alkylene structure, and further preferably includes at least one structural unit selected from the group consisting of the structural unit represented by formula (1A), and the structural unit represented by formula (1B).

The content of the alkylene structural unit is preferably 50 mass% or more and 75 mass% or less, more preferably 55 mass% or more and 70 mass% or less, and still more preferably 55 mass% or more and 65 mass% or less based on 100 mass% of the total content of the alkylene structural units and the nitrile group-containing structural units. By setting the content of the alkylene structural unit in the above range, the adsorptivity to the material to be dispersed and the affinity for the dispersion medium can be controlled, and the material to be dispersed can be stably present in the dispersion medium. Additionally, the affinity of the copolymer for the electrolytic solution can be controlled, and problems such as an increase in the resistance of the electrolytic solution due to the dissolution of the copolymer in the electrolytic solution in the battery can be prevented.

### [Nitrile group-containing structural unit]

The nitrile group-containing structural unit is a structural unit including a nitrile group, and preferably includes a structural unit including an alkylene structure substituted by a nitrile group, and more preferably includes a structural unit only consisting of an alkylene structure substituted by a nitrile group. The alkylene structure is preferably a linear or branched alkylene structure. The nitrile group-containing structural unit may further include a structural unit including (or only consisting of) an alkyl structure substituted by a nitrile group. The number of the nitrile group contained in the nitrile group-containing structural unit is preferably one.

The nitrile group-containing structural unit preferably includes a structural unit represented by the following general formula (2A).

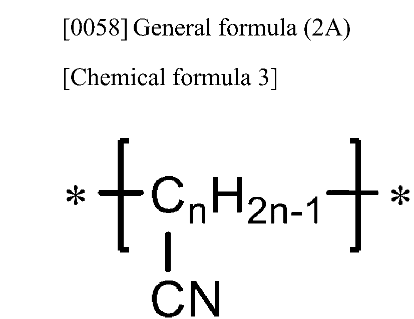

In general formula (2A), n represents an integer of 2 or more. n is preferably an integer of 6 or less, more preferably an integer of 4 or less, and further preferably an integer of 3 or less. In particular, n is preferably 2.

The nitrile group-containing structural unit may include a structural unit represented by the following general formula (2B).

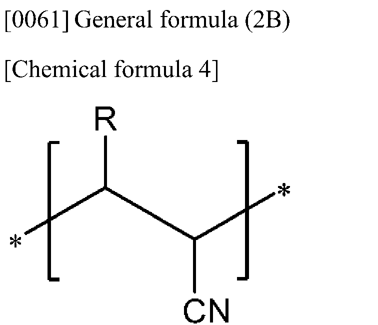

In general formula (2B), R represents a methyl group.

The method for introducing the nitrile group-containing structural unit into the copolymer is not particularly limited, and the method (method 2a) for preparing the copolymer by a polymerization reaction using a monomer composition containing a nitrile group-containing monomer can be preferably used. The finally obtained copolymer includes the nitrile group-containing structural unit as the nitrile group-containing structural unit. The nitrile group-containing monomer capable of forming the nitrile group-containing structural unit may be a monomer including a polymerizable carbon-carbon double bond and a nitrile group, for example, an α,β-ethylenically unsaturated group-containing compound having a nitrile group. Specifically, the nitrile group-containing monomer may be acrylonitrile, methacrylonitrile, and the like. In particular, the nitrile group-containing monomer preferably includes acrylonitrile from the viewpoint of enhancing the intermolecular force between the copolymers and/or between the copolymer and the material to be dispersed (a material to be adsorbed). The nitrile group-containing monomer can be used alone or in combination of two or more.

The content of the nitrile group-containing structural unit is preferably 25 mass% or more and 50 mass% or less, more preferably 30 mass% or more and 45 mass% or less, and still more preferably 35 mass% or more and 45 mass% or less based on 100 mass% of the total content of the alkylene structural units and the nitrile group-containing structural units. By setting the content of the nitrile group-containing structural unit in the above range, the adsorptivity to the material to be dispersed and the affinity for the dispersion medium can be controlled, and the material to be dispersed can be stably present in the dispersion medium. Additionally, the affinity of the resin composition for the electrolytic solution can be controlled, and problems such as an increase in the resistance of the electrolytic solution due to the dissolution of the resin composition in the electrolytic solution in the battery can be prevented.

### [Other structural units]

As needed, structural units other than the alkylene structural units and the nitrile group-containing structural units may also be contained, provided that they do not impair the effects of the present disclosure. Examples of other structural units include an amide group-containing structural unit and a carboxyl group-containing structural unit.

### (Alkali metal)

The resin composition of the present disclosure contains an alkali metal. The content of the alkali metal in the resin composition is 50 ppm or more and less than 10,000 ppm.

Preferably, the content is 500 ppm or more and 8,000 ppm or less, and more preferably 2,000 ppm or more and 5,000 ppm or less.

By having the alkali metal content within the above range, when dispersing the material to be dispersed such as carbon materials, the adsorption to non-dispersed materials and the affinity to the dispersion medium are improved, enhancing dispersibility.

Moreover, if the amount of alkali metals in the resin composition is within the above range, it becomes easier to control the molecular weight of the copolymer (X) to an appropriate range by using alkali metal compounds as basic compounds for modification or by applying shear stress to the copolymer, which has the effect of improving the dispersibility of the material to be dispersed.

Alkali metals are contained in the resin composition from, for example, monomers used to synthesize the copolymer before modification or copolymer (X), alkali metal compounds used to modify the copolymer, alkali metal compounds used as additives for pH adjustment, alkali metals contained in solvents, or the like.

That is, the alkali metals contained in the resin composition include not only alkali metal compounds intentionally added but also alkali metals derived from the monomers, catalysts, additives, solvents, and the like.

Examples of alkali metal include elements such as lithium, sodium, and potassium.

The alkali metal content in the resin composition can be determined by the method described in the examples using an ICP emission spectrometer.

### (Solvent)

The resin composition of the present embodiment preferably contains a solvent. Any solvent capable of dissolving the copolymer may be used, but an amide-based polar solvent is preferred. Examples of the amide-based polar solvent include N-methyl-2-pyrrolidone (NMP), N-ethyl-2-pyrrolidone (NEP), N,N-dimethylformamide, N,N-dimethylacetamide, N,N-diethylacetamide, and N-methylcaprolactam. Among these, it is more preferable that the solvent includes at least one selected from the group consisting of N-methyl-2-pyrrolidone and N-ethyl-2-pyrrolidone.

### (Method for producing resin composition)

The method for producing the resin composition of the present embodiment is not particularly limited, and any method for producing the resin composition may be used.

Examples of the method for producing the resin composition include a method including preparing a copolymer by polymerizing a monomer composition containing a conjugated diene monomer and a nitrile-group-containing monomer, and hydrogenating the conjugated diene monomer unit contained in the copolymer to obtain a resin composition containing the copolymer (X). In addition, the resin composition may also be produced by modifying a copolymer having an alkylene structural unit and a nitrile group-containing structural unit with a basic compound such as an alkyl metal compound, or by applying shear stress to the copolymer, thereby obtaining a resin composition containing the copolymer (X).

Furthermore, to ensure that the alkali metal content is 50 ppm or more and less than 10,000 ppm, and that the resistivity when the resin composition is set to a non-volatile content of 8 mass% with N-methyl-2-pyrrolidone is 5,000 Ω·cm or more and 25,000 Ω·cm or less, the following methods may be mentioned in addition to the raw materials or blending amounts for producing the copolymer. The methods include, for example, <1> a method of applying shear stress using a grinder to a copolymer containing alkali metals, <2> a method of adding an alkali metal or alkali metal compound to the copolymer to generate a modified copolymer, and applying shear stress using the aforementioned grinder, and <3> a method of applying shear stress to the copolymer using a grinder or the like, and then adding an alkali metal or alkali metal compound.

Among these, the methods <2> or <3> are preferable, and it is preferable to use an alkali metal compound with a maximum particle size of 150 µm or less, particularly sodium hydroxide. By applying shear stress to the copolymer in the presence of alkali metal compounds with a maximum particle size of 150 µm or less, the finely dispersed alkali metal compounds absorb moisture, come into contact with the copolymer, promote the hydrolysis reaction of the copolymer, and can control the structure, molecular weight, and molecular weight distribution suitable for dispersing the material to be dispersed.

In the methods <2> or <3>, examples of the alkali metal compounds used for modifying the copolymer include an alkali metal hydroxide or an alkali metal alkoxide. Preferably, it is an alkali metal hydroxide.

That is, the method for producing the resin composition preferably includes a step of mixing an alkali metal compound with a copolymer having an alkylene structural unit and a nitrile group-containing structural units to produce a resin composition containing the copolymer (X) and an alkali metal.

At this time, the copolymer before modification is preferably a copolymer having alkylene structural units and nitrile group-containing structural units, mixed with an alkali metal compound, and having a content of 50 mass% or more and 75 mass% or less of the alkylene structural units, and 25 mass% or more and 50 mass% or less of the nitrile group-containing structural units.

In order to obtain a resin composition satisfying the above requirements, it is preferable that the copolymer before modification be dissolved in an amide-based polar solvent at 60°C to 100°C. In addition, it is preferable to mix the alkali metal compound under conditions of 40°C to 100°C, and more preferably under conditions of 60°C to 80°C.

Examples of alkali metal compound include an alkali metal hydroxide and an alkali metal alkoxide, and it is preferable to use an alkali metal hydroxide.

Examples of the alkali metal hydroxide that can be used include lithium hydroxide, sodium hydroxide, and potassium hydroxide. From the perspective of processability and handling, sodium hydroxide is preferable because it has excellent dispersion stability of the material to be dispersed.

Sodium hydroxide has hygroscopic properties and can exhibit excellent effects when modifying part of the structural units of the copolymer through hydrolysis or the like.

Examples of the alkali metal alkoxide include sodium ethoxide and sodium butoxide.

The alkali metal compound used to modify the copolymer preferably have a maximum particle size of 150 µm or less, more preferably 100 µm or less, and still more preferably 50 µm or less. Moreover, a maximum particle size of 20 µm or more is preferable.

When the maximum particle size of the alkali metal compound is within the above range, the precipitation of alkali metal compounds in the resin composition is suppressed, resulting in superior stability of the resin composition. The sedimentation rate of alkali metal compounds in the resin composition can be estimated from Stokes' law, and the viscosity of the resin composition, along with the density and particle size of the alkali metal compounds, is important for controlling the dispersion stability of the material to be dispersed. The maximum particle size of the alkali metal compound can be calculated, for example, by filtering through a filter with a known mesh size.

The particle size of the alkali metal compound is preferably controlled by performing a dry and/or wet grinding treatment using a conventionally known grinder. A conventionally known grinder can be used for the grinding treatment.

By setting the maximum particle size of the alkali metal compounds within the above range, it is possible to appropriately control not only the composition and structure of the structural units constituting the copolymer (X) but also changes in the molecular weight or the like of the copolymer (X) due to modification. Such control of the molecular weight and molecular weight distribution of the copolymer (X) allows for a lower viscosity dispersion composition when the material to be dispersed is dispersed.

If the maximum particle size of the alkali metal compound is large, the alkali metal compound may precipitate in the resin composition, making it impossible to control the molecular weight of the copolymer, and may also reduce the long-term stability of the carbon material dispersion composition and mixture slurry described later.

A grinder is a device that applies forces such as compressive force, impact force, shear force, and frictional force to the sample to refine it. The device for controlling particle size can include mortar and pestle, pin mill, hammer mill, pulverizer, attritor, jet mill, cutter mill, ball mill, bead mill, colloid mill, conical mill, disk mill, edge mill, wonder crusher, vibration mill, ultrasonic homogenizer, high-shear mixer, and other grinders.

To control the content of alkali metals in the resin composition and the specified resistivity, it is preferable to dissolve the copolymer before modification in a solvent at 60°C to 100°C, and as a more preferable aspect, the resin composition containing the solvent may contain the copolymer (X) in an amount of 1 to 50, 2 to 40, 5 to 30, or 10 to 20 mass% with respect to the total amount of the resin composition. In a more preferable aspect, it is preferable that the solvent may contain an amide-based polar solvent. Furthermore, to satisfy the above requirements for the resin composition, it is preferable to dissolve the alkali metal compound in a solvent at 40°C to 100°C or 60°C to 80°C, and as a more preferable aspect, the resin composition containing the solvent may contain the alkali metal compound in an amount of 0.1 to 20 mass%, 0.5 to 10 mass%, 1 to 8 mass%, or 2 to 5 mass% with respect to the total amount of the resin composition. By ensuring that both the copolymer (X) and the alkali metal compound meet these ranges with respect to the total amount of the resin composition, the content of alkali metals in the resin composition and the specified resistivity can be more easily controlled.

To control the content of alkali metals in the resin composition and the specified resistivity, it is advisable to add alkali metal compounds during the method for producing the resin composition. In that case, as one form of the method for producing the resin composition, it is preferable to mix the copolymer (X) and the alkali metal compound in a state where they are dissolved in a solvent. In this case, it is more preferable to prepare a solution of the copolymer (A) dissolved in a solvent and a solution of the alkali metal compound dissolved in a solvent separately, and then mix them afterward. As a solvent, it is preferable to use an amide-based polar solvent.

To control the content of alkali metals in the resin composition and the specified resistivity, there are methods to control the amount and manner of adding alkali metal compounds in the production process of the resin composition, as mentioned above. According to this method, it is possible to control the content of alkali metals in the resulting resin composition, and it also allows for the control of the specified resistivity.

Another method to control the content of alkali metals and the specified resistivity in the resin composition is to control the molecular weight and molecular weight distribution of the copolymer (X). For example, even in cases where the content of alkali metals is low and the specified resistivity is high, it is possible to suppress the increase in specified resistivity by reducing the molecular weight of the copolymer (X). Preferably, the number-average molecular weight Mn of the copolymer (X) should be 70,000 or less, 60,000 or less, or 50,000 or less. As another aspect, preferably, the Mw/Mn of the copolymer (X) should be 2.60 or less, 2.50 or less, or 2.40 or less. As a more preferable aspect, when the Mw/Mn of the copolymer (X) is 2.60 or less, 2.50 or less, or 2.40 or less, it is preferable that the Z-average molecular weight Mz is 400,000 or less, 300,000 or less, or 250,000 or less. Some methods to control these molecular weights and molecular weight distributions include controlling the mixing time of the copolymer (X) and the alkali metal compound, the amount of alkali metal compound used, the respective content ratios of the copolymer (X) and the alkali metal compound with respect to the total amount of the resin composition, and the number of passes when using a pass-type dispersion device.

### <<Carbon Material Dispersion Composition>>

The carbon material dispersion composition of the present embodiment includes at least a carbon material and the resin composition of the present embodiment. It is also preferable to include a solvent. By including a solvent in the carbon material dispersion composition, it is easier to obtain a carbon material dispersion composition with a good dispersion state.

### (Carbon material)

The carbon material that can be used may be various carbon blacks such as acetylene black, furnace black, hollow carbon black, channel black, thermal black and Ketjen black. The carbon material that can be used may also be an oxidized carbon black, a graphitized carbon black, mesophase carbon black; an amorphous carbonaceous material such as soft carbon and hard carbon; carbon nanotube or carbon nanofiber which is fibrous carbon, carbon fiber such as vapor-grown carbon fiber, and the like. Among them, it is preferable to include at least one selected from the group consisting of carbon black and carbon fibers, and particularly preferable to include carbon nanotubes.

The carbon purity of the carbon material is preferably 95 mass% or more and more preferably 97 mass% or more based on the mass of the carbon material (taking the mass of the carbon material as 100 mass%).

Carbon nanotubes have a structure in which planar graphite is rolled into a cylindrical shape, including single-walled carbon nanotubes and multi-walled carbon nanotubes, which may be mixed together. Among them, it is preferable to include multi-walled carbon nanotubes. The multi-walled carbon nanotube has a structure in which two, three or more graphite layers are wound, and the single-walled carbon nanotube has a structure in which one graphite layer is wound. The side wall of the carbon nanotube is not necessarily a graphite structure. For example, a carbon nanotube provided with a sidewall having an amorphous structure can also be used as the carbon material.

The average outer diameter of the carbon nanotubes is preferably 1 nm or more and 25 nm or less, more preferably 3 nm or more and 20 nm or less, and still more preferably 4 nm or more and 15 nm or less. When the average outer diameter is within the above range, it is easy to form a good conductive network within the electrode, and during charge and discharge, the active material inside the secondary battery is utilized homogeneously, thereby suppressing the degradation of the active material and further improving the cycle characteristics of the secondary battery.

The BET specific surface area of the carbon nanotubes is preferably 100 m²/g or more and 1000 m²/g or less, and more preferably 200 m²/g or more and 700 m²/g or less. When the BET specific surface area is within the above range, it is possible to form an efficient conductive network with a small amount, thereby reducing the amount of conductive material in the electrode. As a result, the degree of freedom in battery design, such as increasing the amount of active material and binder resin, is enhanced. Furthermore, during the preparation of the mixture slurry, the composite of the active material and carbon nanotubes is facilitated, making it easier to obtain an electrode film with a homogeneous conductive network coated with carbon nanotubes on the surface of the active material, which suppresses the electrolyte decomposition reaction at the interface between the electrolyte and the active material, thereby improving the cycle characteristics of the battery.

The BET specific surface area can be measured by the BET method described in JIS Z 8830:2013.

The G/D ratio of the carbon nanotubes (the peak ratio of the G-band to the D-band) is preferably 0.5 to 10, and more preferably 0.7 to 4.5 when the maximum peak intensity in the range of 1,560 cm⁻¹ to 1,600 cm⁻¹ is G, and the maximum peak intensity in the range of 1,310 cm⁻¹ to 1,350 cm⁻¹ is D, in the Raman spectrum.

When the G/D ratio of the carbon nanotubes is within the above range, it is considered that the contact resistance between the carbon nanotubes becomes small, making it easier to obtain good conductivity. It is also presumed that the amount of functional groups on the surface of the multi-walled carbon nanotubes is appropriate, and the affinity with the solvent is good, resulting in better dispersibility.

The volume resistivity of the carbon nanotubes is preferably 1.0×10⁻² Ω·cm to 3.0×10⁻² Ω·cm and more preferably 1.0×10⁻² Ω·cm to 2.0×10⁻² Ω·cm.

The volume resistivity of the carbon nanotubes can be measured using a powder resistivity measure device (Loresta GP powder resistivity measurement system MCP-PD-51, manufactured by Mitsubishi Chemical Analytech Co., Ltd.). When the volume resistivity is within the above range, the conductivity of the electrode film tends to be good, making it easier to obtain a secondary battery with excellent rate characteristics and cycle characteristics.

It is preferable that the carbon nanotubes are those from which metallic foreign particles have been removed using an electromagnet. For example, it is preferable to set an electromagnet in the crushing step or filling step of the carbon nanotubes and pass the carbon nanotubes through it to remove metallic foreign particles.

The carbon purity of the carbon nanotubes is preferably high, and it is preferable that it is 98.0 mass% or more, more preferably 99.5 mass% or more, still more preferably 99.8 mass% or more, and particularly preferably 99.9 mass% or more in 100 mass% of carbon nanotubes.

That is, the content of metallic foreign particles is preferably low, and it is preferable that it is 2.0 mass% or less, more preferably 0.5 mass% or less, still more preferably 0.2 mass% or less, and particularly preferably 0.1 mass% or less in 100 mass% of carbon nanotubes.

By using carbon nanotubes produced by a method that does not use metal catalysts, or carbon nanotubes obtained by conventional purification methods such as acid treatment, the content of metallic foreign particles can be reduced to 0.5 mass% or less with respect to 100 mass% of carbon nanotubes, thereby reducing the amount of metallic foreign particles contained in the carbon nanotube dispersion composition and improving various characteristics of the secondary battery.

The carbon purity of the carbon nanotubes can be determined by the method described in the examples using an ICP emission spectrometer.

The solvent is not particularly limited as long as it can be mixed with the resin composition of the present embodiment, but it is preferable that it can dissolve the resin composition, and it is further preferable that it is a high dielectric constant solvent, and it is preferable to include a solvent consisting of one kind of high dielectric constant solvent or a mixed solvent consisting of two or more kinds. In addition, it is possible to mix one or two or more other solvents with the high dielectric constant solvent.

The high dielectric constant solvent may be an amide solvent (N-methyl-2-pyrrolidone (NMP), N-ethyl-2-pyrrolidone (NEP), N,N-dimethyl formamide, N,N-dimethyl acetamide, N,N-diethyl acetamide, N-methyl caprolactam, and the like), a heterocyclic solvent (cyclohexyl pyrrolidone, 2-oxazolidone, 1,3-dimethyl-2-imidazolidinone, γ-butyrolactone, and the like), a sulfoxide solvent (dimethyl sulfoxide and the like), a sulfone solvent (hexamethyl phosphorotriamide, sulfolane, and the like), a lower ketone solvent (acetone, methyl ethyl ketone, and the like), a carbonate solvent (diethyl carbonate, dimethyl carbonate, ethyl methyl carbonate, fluoroethylene carbonate, propylene carbonate, ethylene carbonate), as well as tetrahydrofuran, urea, acetonitrile, and the like. The dispersion medium preferably includes an amide-based polar solvent, and more preferably includes at least one solvent selected from the group consisting of N-methyl-2-pyrrolidone and N-ethyl-2-pyrrolidone. The relative permittivity of the high dielectric constant solvent can be based on values listed in solvent handbooks, and it is preferable that it is 2.5 or more at 20°C. By using a high dielectric constant solvent, the interaction between the nitrile group contained in the resin composition of the present embodiment, the carbon material, and the solvent can be enhanced.

The moisture content in the solvent is preferably 100 ppm or more and 1500 ppm or less, and more preferably 100 ppm or more and 1000 ppm or less. When it is within the above range, the alkali metal contained in the resin composition of the present embodiment is likely to dissolve in the carbon material dispersion composition, resulting in good dispersion stability of the carbon material dispersion composition.

The content of the solvent of the present embodiment is preferably 90 mass% to 99 mass%, more preferably 92 mass% to 98 mass%, based on the mass of the carbon material dispersion composition (taking the mass of the carbon material dispersion composition as 100 mass%). When it is within the above range, a flowable carbon material dispersion composition is likely to be obtained, resulting in a carbon material dispersion composition with excellent dispersion stability. By using a carbon material dispersion composition with excellent dispersion stability, an electrode film with stable conductivity can be obtained, which tends to stabilize the quality of the secondary battery.

To obtain the carbon material dispersion composition of the present embodiment, it is preferable to perform a treatment to disperse the carbon material in the solvent. The dispersing device used for such a treatment is not particularly limited.

As the dispersing device, a disperser that is generally used for pigment dispersion or the like can be used. For example, it may be either a media-less disperser or a media-type disperser. Examples of the media-less disperser include mixers such as dispersers, homomixers, planetary mixers; homogenizers (Advanced Digital Sonifer(R) Model 450DA manufactured by Branson Ultrasonics Corporation, "Clearmix" manufactured by M-Technique Co., Ltd., "Filmix" manufactured by Primix Corporation, "Ablimix" manufactured by Silverson Machines Ltd., and the like); paint conditioners (manufactured by Red Devil, Inc.), colloid mills ("PUC Colloid Mill" manufactured by PUC, "Colloid Mill MK" manufactured by IKA-Werke GmbH & Co. KG), and cone mills ("Cone Mill MKO" manufactured by IKA-Werke GmbH & Co. KG, and the like). Examples of the media-type disperser include ball mills, sand mills ("DYNO-MILL" manufactured by Shinmaru Enterprises Corporation, and the like), attritors, pearl mills ("DCP Mill" manufactured by EIRICH, and the like), coball mills, bead mills (Mugen Flow (R) manufactured by Ashizawa Finetech Ltd.), and media-type paint conditioners. Furthermore, media-less dispersers such as high-pressure homogenizers (e.g., "Genus PY" manufactured by Genus Co., Ltd., "Starburst" manufactured by Sugino Machine Limited, and "Nanomizer" manufactured by Nanomizer Co., Ltd.), "CREA SS-5" manufactured by M-Technique Co., Ltd., "MICROS" manufactured by Nara Machinery Co., Ltd., and the like, and other roll mills can also be mentioned. The dispersers are not limited to these.

The content of the carbon material contained in the carbon material dispersion composition is preferably 1 mass% or more and 20 mass% or less, more preferably 2 mass% or more and 15 mass% or less, and still more preferably 3 mass% or more and 10 mass% or less based on the mass of the carbon material dispersion composition (taking the mass of the carbon material dispersion composition as 100 mass%).

The content of the dispersant contained in the carbon material dispersion composition is preferably 5 mass% or more and 100 mass% or less, more preferably 10 mass% or more and 75 mass% or less, and still more preferably 20 mass% or more and 50 mass% or less based on the mass of the carbon material dispersion composition (taking the mass of the carbon material dispersion composition as 100 mass%). When the amount of the dispersant is within the above range, the dispersion stability of the carbon material in the carbon material dispersion composition is likely to be good. In addition, the peeling strength of the electrode for the secondary battery tends to be good.

The carbon material dispersion composition preferably has a moisture content of 100 ppm to 1500 ppm, and more preferably 200 ppm to 1000 ppm. When the moisture content of the carbon material dispersion composition is within the above range, the gelation of the mixture slurry described later is suppressed, making it easier to obtain a stable quality mixture slurry and electrode film.

The initial viscosity of the carbon material dispersion composition of the present embodiment is preferably such that the viscosity measured at 25°C and 100 rpm using a B-type viscometer is 100 mPa·s or more and 2,000 mPa·s or less, and more preferably 200 mPa·s or more and 1,000 mPa·s or less. When the initial viscosity of the carbon material dispersion composition is within the above range, it is considered that the dispersion state of the carbon material contained in the carbon material dispersion composition is appropriate, making it easier to form a conductive network.

The viscosity of the carbon material dispersion composition of the present embodiment after one week of storage under conditions of 60°C is preferably such that the viscosity measured, after cooling to 25°C, using a B-type viscometer at 25°C and a rotor rotation speed of 100 rpm, is 500 mPa·s or more and 6,000 mPa·s or less, more preferably 500 mPa·s or more and 3,000 mPa·s or less, and still more preferably 500 mPa·s or more and 2,000 mPa·s or less.

The carbon material dispersion composition with a viscosity within the above range are considered to have an appropriate composition ratio of the carbon material, the resin composition, and the solvent, as well as an appropriate dispersion process, and to exhibit good dispersion stability. Since the adsorption reaction of the resin composition contained in the carbon material dispersion composition to the surface of the carbon material is an endothermic reaction, evaluating the viscosity of the carbon material dispersion composition after storage under high-temperature conditions makes it possible to determine the necessary and sufficient amount of the resin composition required to obtain a carbon material dispersion composition with excellent dispersion stability.

It is preferable to use a carbon material dispersion composition of the present embodiment from which metal foreign substances have been removed by a filter or magnet.

### [Step for removing metallic foreign particles]

The method for removing metallic foreign particles is not particularly limited, and examples include a filtration step using a filter, and a magnetic separation step using an electromagnet.

It is preferable to have both a filtration step and a magnetic separation step, because the magnetic separation step can remove metallic foreign particles contained in the carbon material, and the filtration step can recover metallic foreign particles that cannot be removed by a magnet.

Furthermore, it is more preferable to perform the magnetic separation step after the filtration step. By performing the final filtration step before shipping the carbon material dispersion composition, metallic foreign particles from pipes and the like can also be removed.

### (Magnetic separation step)

Various known methods can be used for removing metallic foreign particles using magnetic force in the magnetic separation step. In particular, it is preferable to use a method in which an electromagnet is set during the manufacturing process of the carbon material dispersion composition and the carbon material dispersion composition is passed through it to remove metallic foreign particles.

The magnetic flux density of the electromagnet is preferably 5,000 gauss or more and 20,000 gauss or less, and more preferably 10,000 gauss or more and 20,000 gauss or less. By using an electromagnet within the above range, it is possible to remove not only metallic foreign particles contained in the carbon material but also metallic foreign particles generated during the manufacturing process.

Specific examples of the electromagnet that can be used include CS-150HHH, CS-250HHH, and CS-300HHH manufactured by Nippon Magnetics Co., Ltd.; DVF-50-6, DVF-50-9, and DVF-50-12 manufactured by Eriez Magnetics Japan Co., Ltd.; and EMF-100S, EMF-150S, EMF-250S, and EMF-300S manufactured by Dae Bo Magnetic Co., Ltd.

The flow rate when the carbon material dispersion composition comes into contact with the electromagnet is preferably 1 L/min or more and 300 L/min or less, and more preferably 30 L/min or more and 200 L/min or less.

The number of times the carbon material dispersion composition passes through the electromagnet is preferably three times or more. When the number of passes is small, it may not be possible to remove metallic foreign particles. When passing through an electromagnet in a circulation system, it is preferable to pass through more times considering the uniformity in the tank used in the manufacturing process.

### (Filtration step)

Filters for separating metallic foreign particles can be either surface filters like membrane filters, or depth filters, but depth filters are more preferred. Since metallic foreign particles are often not spherical and have orientation, the use of a depth filter enables efficient removal of metallic foreign particles from carbon material dispersion compositions.

Depth filters, unlike surface filters (which mainly capture particulate matter in a fluid on the filter surface), are filters that mainly capture particulate matter in a fluid inside the filter medium, and are characterized by high particle-retention performance and reduced susceptibility to clogging. By using a depth filter, metallic foreign particles in carbon material dispersion compositions can be removed more selectively.

Examples of the depth filter that can be used include 3M (TM) PP non-woven depth cartridge NT-T series.

It is preferable that the filtration accuracy of the filter is 5 µm or more and 50 µm or less, and more preferably 10 µm or more and 40 µm or less. When a filter with a smaller pore size is used in order to increase the removal rate of metallic foreign particles in the carbon material dispersion composition, clogging by the carbon material may occur, which can reduce the efficiency of removing the metallic foreign particles. On the other hand, the carbon material dispersion composition filtered within the above range exhibits high removal efficiency for metallic foreign particles when passed through the filter, making it easier to obtain a carbon material dispersion composition with a reduced amount of metallic foreign particles.

### <Mixture slurry>

The mixture slurry of the present embodiment contains a carbon material dispersion composition and an active material. That is, it is preferable that the mixture slurry contains at least the resin composition of this disclosure, a carbon material, an active substance, and further a binder resin.

The binder resin is a resin used to bind together the constituents of carbon materials. Examples of binders include fluorine resins, polymers or copolymers containing ethylene, propylene, vinyl chloride, vinyl acetate, vinyl alcohol, maleic acid, acrylic acid, acrylic acid ester, methacrylic acid, methacrylic acid ester, acrylonitrile, styrene, vinyl butyral, vinyl acetal, vinylpyrrolidone or the like as a constituent unit; polyurethane resins, polyester resins, phenol resins, epoxy resins, phenoxy resins, urea resins, melamine resins, alkyd resins, acrylic resins, formaldehyde resins, silicone resins, and fluorine resins; cellulose resins such as carboxymethyl cellulose; rubbers such as styrene butadiene rubber; and conductive resins such as polyaniline and polyacetylene.

Among them, using a fluororesin as the binder resin is preferable from the perspective of electrochemical oxidation-reduction resistance.

Examples of the fluororesin of the present embodiment include polyvinylidene fluoride, polyvinyl fluoride, and tetrafluoroethylene.

The weight-average molecular weight of the fluororesin is preferably 10,000 or more and 2,000,000 or less, more preferably 100,000 or more and 1,000,000 or less, and particularly preferably 200,000 or more and 1,000,000 or less.

The active material is a material that is a base for battery reaction. Active materials are classified into a positive electrode active material and a negative electrode active material according to the electromotive force. In the present specification, the positive electrode active substance and the negative electrode active substance may simply be referred to as "active substance".

The positive electrode active material is not particularly limited, but metal compounds such as metal oxides and metal sulfides that can dope or intercalate lithium ions or sodium ions, conductive polymers and the like can be used. Examples include oxides of transition metals such as Fe, Co, Ni, and Mn, complex oxides with lithium or sodium, inorganic compounds such as transition metal sulfides, poly-anionic compounds, and Prussian blue types. Specific examples include transition metal oxide powders such as MnO, V₂O₅, V₆O₁₃, and TiO₂, complex oxide powders of lithium and transition metals such as layered lithium nickelate, lithium cobaltate, lithium manganate, and spinel structured lithium manganate, lithium iron phosphate materials which are phosphates with an olivine structure, transition metal sulfide powders such as TiS₂ and FeS, layered sodium iron, sodium manganate, sodium chromate, sodium nickelate, and sodium iron phosphate materials which are phosphates with an olivine structure. In addition, conductive polymers such as polyaniline, polyacetylene, polypyrrole, and polythiophene can be used. In addition, mixtures of the above inorganic compounds or organic compounds may be used.

The positive electrode active material is preferably a composite oxide of lithium containing transition metals such as Al, Fe, Co, Ni, and Mn, and it is more preferable to be a composite oxide of lithium containing any of Al, Co, Ni, or Mn, and it is particularly preferable to be a composite oxide of lithium containing Ni and/or Mn. When these active materials are used, particularly good effects can be obtained.

The negative electrode active material is not particularly limited as long as it can dope or intercalate lithium or sodium ions. Examples thereof include metal Li, and its alloys such as tin alloys, silicon alloys, and lead alloys, metal oxide materials such as LiXFe₂O₃, LiXFe₃O₄, LiXWO₂ (x is a number of 0<x<1), lithium titanate, lithium vanadate, and lithium silicate, conductive polymer materials such as polyacetylene and poly-p-phenylene, amorphous carbonaceous materials such as soft carbon and hard carbon, carbonaceous powders such as artificial graphite such as highly-graphitized carbon materials and natural graphite, and carbon-based materials such as carbon black, mesophase carbon black, resin-baked carbon materials, air-grown carbon fibers, and carbon fibers. These negative electrode active materials can be used alone or a plurality thereof can be used in combination.

The BET specific surface area of the active material is preferably 0.1 m²/g or more and 10 m²/g or less, more preferably 0.2 m²/g or more and 5 m²/g or less, and particularly preferably 0.3 m²/g or more and 3 m²/g or less.

The average particle size of the active material is preferably within the range of 0.05 µm to 100 µm, and more preferably within the range of 0.1 µm to 50 µm. The average particle size of the active material referred to in the present specification is an average value of the particle sizes of the active material measured with an electron microscope.

In order to obtain the mixture slurry of the present embodiment, it is preferable to add an active material to the carbon material dispersion composition and then perform a treatment for dispersion. The dispersing device used for such a treatment is not particularly limited. The mixture slurry can be obtained using the dispersing device described in the above carbon material dispersion composition.

The content of the active material in the mixture slurry is preferably 20 mass% to 85 mass% based on 100 mass% of the mixture slurry, and particularly preferably 40 mass% to 85 mass%.

The content of the carbon material in the mixture slurry is preferably 0.05 mass% to 10 mass%, preferably 0.1 mass% to 5 mass%, and preferably 0.1 mass% to 3 mass% based on 100 mass% of the active material.

The content of the binder resin in the mixture slurry is preferably 0.5 mass% to 20 mass%, more preferably 1 mass% to 10 mass%, and particularly preferably 1 mass% to 5 mass% based on 100 mass% of the active material.

The solid concentration of the mixture slurry is preferably 30 mass% to 90 mass%, and more preferably 40 mass% to 85 mass% based on 100 mass% of the mixture slurry.

The moisture content in the mixture slurry is preferably 500 ppm or less, more preferably 300 ppm or less, and particularly preferably 100 ppm or less.

### <<Electrode>>

The electrode film of the present embodiment includes a current collector and an electrode film formed from the mixture slurry. The electrode film is a coating film of the mixture slurry. For example, it is a coating film in which an electrode mixture layer is formed by applying and drying a mixture slurry on a current collector.

The material and shape of the current collector used for the electrode film of the present embodiment are not particularly limited, and those suitable for various secondary batteries can be appropriately selected. For example, the material of the current collector may be a metal or an alloy, such as aluminum, copper, nickel, titanium, stainless, and the like. In addition, regarding the shape, a foil on a flat plate is generally used, but a current collector with a roughened surface, a current collector having a perforated foil shape, and a current collector having a mesh shape can be used.

A method of applying a mixture slurry on a current collector to form an electrode film is not particularly limited, and known methods can be used. Specific examples thereof include a die coating method, a dip coating method, a roll coating method, a doctor coating method, a knife coating method, a spray coating method, a gravure coating method, a screen printing method, and an electrostatic coating method. Regarding the drying method, standing drying, a fan dryer, a warm air dryer, an infrared heater, a far infrared heater and the like can be used, but the method is not particularly limited thereto.

In addition, after coating, rolling may be performed using a planographic press, a calendar roll or the like. The thickness of the electrode mixture layer is generally 1 µm or more and 500 µm or less, and preferably 10 µm or more and 300 µm or less.

### <<Secondary Battery>>

The secondary battery of the present embodiment includes an electrode having the electrode film of the present disclosure and an electrolyte. The carbon material dispersion composition using the resin composition of the present embodiment has excellent rate characteristics to form a good conductive network within the secondary battery electrode, and during charge and discharge, the active material is utilized homogeneously, making it less likely for the active material to deteriorate. Furthermore, overcharging and over-discharging during charge and discharge are suppressed. Therefore, degradation of battery characteristics due to electrolyte decomposition or metal deposition is less likely to occur, resulting in excellent cycle characteristics.

Regarding the positive electrode, those obtained by applying and drying a mixture slurry containing a positive electrode active material on a current collector to produce an electrode film can be used.

Regarding the negative electrode, those obtained by applying and drying a mixture slurry containing a negative electrode active material on a current collector to produce an electrode film can be used.

The electrolyte may include various conventionally known electrolytes in which ions are capable of moving. Examples thereof include those containing lithium salts such as LiBF₄, LiClO₄, LiPF₆, LiAsF₆, LiSbF₆, LiCF₃SO₃, Li(CF₃SO₂)₂N, LiC₄F₉SO₃, Li(CF₃SO₂)₃C, LiI, LiBr, LiCl, LiAlCl, LiHF₂, LiSCN, and LiBPh₄ (where, Ph is a phenyl group), but the present invention is not limited thereto, and those containing sodium salts can be used. Preferably, the electrolyte is dissolved in a non-aqueous solvent and used as an electrolytic solution.

The non-aqueous solvent is not particularly limited and may be, for example, a carbonate solvent such as ethylene carbonate, propylene carbonate, butylene carbonate, dimethyl carbonate, ethylmethyl carbonate, and diethyl carbonate; a lactone solvent such as γ-butyrolactone, γ-valerolactone, and γ-octanoic lactone; a glyme solvent such as tetrahydrofuran, 2-methyltetrahydrofuran, 1,3-dioxolane, 4-methyl-1,3-dioxolane, 1,2-methoxyethane, 1,2-ethoxyethane, and 1,2-dibutoxyethane; an ester solvent such as methyl formate, methyl acetate, and methyl propionate; a sulfoxide solvent such as dimethyl sulfoxide and sulfolane; and a nitrile solvent such as acetonitrile. These solvents may be used alone or in combination of two or more.

The secondary battery of the present embodiment preferably contains a separator. Examples of separators include a polyethylene non-woven fabric, a polypropylene non-woven fabric, a polyamide non-woven fabric and those obtained by subjecting them to a hydrophilic treatment, but the present invention is not particularly limited thereto.

The structure of the secondary battery of the present embodiment is not particularly limited, but is generally composed of a positive electrode and a negative electrode, and a separator provided as necessary, and various shapes such as a paper shape, a cylindrical shape, a button shape, and a laminate shape can be used according to the purpose of use.

The applications of the secondary battery of the present embodiment are not particularly limited, and specifically, it can be used as a power source for consumer devices such as mobile phones, laptops, and digital cameras, as an emergency power source for hospitals, factories, buildings, or the like, and for vehicles such as hybrid vehicles, plug-in hybrid vehicles, electric vehicles, assist bicycles, and railway vehicles. The secondary battery is, for example, for recovering regenerative energy generated by a vehicle.

Among them, since it is a secondary battery with high charge and discharge performance and excellent cycle characteristics, it can be suitably used in vehicles, ensuring high safety and improving fuel efficiency. Furthermore, it can exhibit excellent effects even in vehicle applications where high current charge and discharge is desired.

The installation position of the secondary battery in the vehicle of the present embodiment is not particularly limited. For example, when installing a secondary battery in a car, the secondary battery can be installed in the engine room, at the rear of the vehicle, or under the seats of the vehicle.

### Examples

The present disclosure will be described below in more detail with reference to examples. The present disclosure is not limited to the following examples as long as it is within the spirit of the present invention. Moreover, unless otherwise mentioned, "part" represents "part by mass" and "%" represents "mass%". The blending amounts in the table are expressed in parts by mass. Note that the blanks in the table indicate that no blending has occurred.

The materials used in the examples and comparative examples are shown below.
- Hydrogenated nitrile butadiene rubber (manufactured by Zannan Scitech Co., Ltd., liquid hydrogenated nitrile butadiene rubber, number-average molecular weight 20,000, weight-average molecular weight 35,000, Z-average molecular weight 60,000, alkylene structural unit content 66 mass%, and nitrile group-containing structural unit content 34 mass%), hereinafter referred to as HNBR1.
- Hydrogenated nitrile butadiene rubber (manufactured by Zannan Scitech Co., Ltd., ZN35052, Mooney viscosity 20, number-average molecular weight 48,000, weight-average molecular weight 110,000, Z-average molecular weight 210,000, alkylene structural unit content 66 mass%, and nitrile group-containing structural unit content 34 mass%), hereinafter referred to as HNBR2.
- Hydrogenated nitrile butadiene rubber (manufactured by Zannan Scitech Co., Ltd., ZN35053, Mooney viscosity 35, number-average molecular weight 53,000, weight-average molecular weight 133,000, Z-average molecular weight 270,000, alkylene structural unit content 64 mass%, and nitrile group-containing structural unit content 36 mass%), hereinafter referred to as HNBR3.
- Hydrogenated nitrile butadiene rubber (manufactured by Zannan Scitech Co., Ltd., ZN35056, Mooney viscosity 65, number-average molecular weight 75,000, weight-average molecular weight 183,000, Z-average molecular weight 364,000, alkylene structural unit content 64 mass%, and nitrile group-containing structural unit content 36 mass%), hereinafter referred to as HNBR4.
- Hydrogenated nitrile butadiene rubber (manufactured by ARLANXEO, Therban(R) 3406, Mooney viscosity 63, number-average molecular weight 78,000, weight-average molecular weight 209,000, Z-average molecular weight 434,000, alkylene structural unit content 66 mass%, and nitrile group-containing structural unit content 34 mass%), hereinafter referred to as HNBR5.
- Carbon nanotubes (manufactured by JEIO Co., Ltd., JENOTUBE6A, average outer diameter 6 nm, BET specific surface area 650 m²/g), hereinafter referred to as CNT1.
- Carbon nanotubes (manufactured by JEIO Co., Ltd., JENOTUBE10B, average outer diameter 10 nm, BET specific surface area 230 m²/g), hereinafter referred to as CNT2.
- HS-100: Denka Black HS-100 (manufactured by Denka Company Limited, acetylene black, average primary particle diameter: 48 nm, BET specific surface area: 39 m²/g), hereinafter referred to as CB1.

The physical property measurement methods for the materials used in each example and comparative example are as follows.

### <Specific Surface Area>

The BET specific surface area of carbon nanotubes and carbon black can be measured according to JIS Z 8830:2013 using the BET method with nitrogen adsorption measurement.

### <Average Outer Diameter>

The average outer diameter of carbon nanotubes can be calculated by observing and imaging the carbon nanotubes using a transmission electron microscope, and then measuring the outer diameters of any 300 carbon nanotubes selected in the obtained observation photographs. Also, the average primary particle diameter of carbon black can be calculated by first observing and imaging the carbon black using a transmission electron microscope, and then measuring the outer diameters of any 100 spherical carbon black primary particles selected in the observation photographs.

### <Mooney Viscosity>

The Mooney viscosity of hydrogenated nitrile butadiene rubber was measured at 100°C using an L-shaped rotor according to Japanese Industrial Standard JIS K6300-1 (ML1+4, 100°C).

### <Production of standard negative electrode>

0.5 parts by mass of acetylene black (Denka Black (R) HS-100, manufactured by Denka Company Limited), 1 part by mass of MAC500LC (carboxymethyl cellulose sodium salt Sunrose special type MAC500L, manufactured by Nippon Paper Industries Co., Ltd., non-volatile content of 100%), and 98.4 parts by mass of water were put into a plastic container having a volume of 150 ml, and then stirred using a rotation/revolution mixer (Awatori Rentaro, ARE-310, manufactured by Thinky Corporation) at 2,000 rpm for 30 seconds. Furthermore, 92 parts by mass of artificial graphite (manufactured by Nippon Graphite Industry Co., Ltd., CGB-20) and 5 parts by mass of silicon oxide (manufactured by OSAKA Titanium Technologies Co., Ltd., SILICON MONOOXIDE SiO 1.3C 5 µm, non-volatile content: 100%) were added as active materials, and the mixture was stirred at 3,000 rpm for 10 minutes using a high-speed stirrer. Subsequently, 3.1 parts by mass of styrene-butadiene rubber (SBR, TRD2001, manufactured by JSR Corporation) was added thereto, and the mixture was stirred at 2,000 rpm for 30 seconds using the rotation/revolution mixer to obtain a negative electrode mixture slurry. Then, the negative electrode mixture slurry was applied onto a copper foil using an applicator so that the basis weight per unit area of the electrode was 8 mg/cm² and the coating film was then dried in an electric oven at 120°C±5°C for 25 minutes. In addition, the sample was subjected to rolling treatment using a roll press (manufactured by Sank Metal Co., Ltd., 3t hydraulic roll press) to produce a standard negative electrode having a mixture layer density of 1.6 g/cm³.

### <Preparation of alkali metal compound dispersion>

In a plastic container having a volume of 2000 cm³, 950 parts by mass of NMP and 50 parts by mass of NaOH (sodium hydroxide, manufactured by Tosoh Corporation, Tosoh Pearl) were added, and a fine emulsor screen was mounted on a high-shear mixer (L5M-A, manufactured by Silverson), and dispersion was carried out at 9000 rpm until the mixture became uniform, then the mixture was filtered through a nylon filter with a mesh opening of 150 µm to prepare a NaOH dispersion (NaOH concentration 5 mass%).

The maximum particle diameter of sodium hydroxide was 150 µm or less.

### <<Physical Property Measurement and Evaluation Method>>

The physical property measurements and evaluation methods for the resin compositions, carbon material dispersion compositions, electrode films, and secondary batteries used in the examples and comparative examples described later are as follows.

### <Measurement of number-average molecular weight, weight-average molecular weight, and Z-average molecular weight of copolymer>

### (Preparation of sample for molecular weight measurement)

For the measurement of the number-average molecular weight (Mn), weight-average molecular weight (Mw), and Z-average molecular weight (Mz) of the copolymer, the sample for molecular weight measurement was prepared by the method described below.

The resin composition was dripped into purified water to precipitate the copolymer, and the precipitate was collected by filtering with a Buchner funnel. The precipitate was directly sprinkled and rinsed with purified water on the Buchner funnel, and then dissolved in tetrahydrofuran (THF) to obtain a solution. The obtained solution was dripped again into purified water, filtered and rinsed with purified water, and the precipitate was redissolved in THF to obtain a sample for molecular weight measurement.

### (Measurement of molecular weight)

The molecular weight was measured through gel permeation chromatography (GPC) with an RI detector using a sample for molecular weight measurement. HLC-8320GPC (manufactured by Tosoh Corporation) was used as the device, three separation columns were connected in series and "TSK-GEL SUPER AW-4000", "AW-3000" and "AW-2500" manufactured by Tosoh Corporation were used as fillers in order. An N,N-dimethylformamide solution of 30 mM of triethylamine and 10 mM of LiBr was used as an eluent, and the measurement was performed under an oven temperature of 40°C and a flow rate of 0.6 mL/min. The concentration of the measurement sample was adjusted to 1% using a solvent consisting of the above eluent, and 20 microliters of the measurement sample is injected. The molecular weight is a polystyrene equivalent value.

### <Content of alkylene structural unit and nitrile group-containing structural unit in copolymer>

### (Preparation of sample for IR measurement)

The resin composition was dripped into purified water to precipitate the copolymer, and the precipitate was collected by filtering with a Buchner funnel. The precipitate was rinsed on the Buchner funnel by sprinkling purified water directly onto it, then dried at 140°C for 1 hour using a hot air oven to prepare a sample for IR measurement.

### (Measurement of IR)

The sample for IR measurement was measured with a Fourier transform infrared spectrometer (manufactured by Thermo Fisher Scientific Inc., Niclet iS5), and the contents of the alkylene structural units and the nitrile group-containing structural units in the copolymer of the resin composition were calculated.

### <Measurement of resistivity of resin composition>

### (Preparation of sample for resistivity measurement)

In a plastic container having a volume of 250 cm³, the resin composition and N-methyl-2-pyrrolidone were weighed to prepare 200 parts by mass of a sample for liquid resistivity measurement with a non-volatile content of 8 mass%.

### (Measurement of resistivity)

Using a sample for liquid resistance measurement, the resistivity was measured with a resistivity meter (IEST Yuan Neng Technology (R), BATTERY SLURRY RESISTIVITY BSR2300), and the resistivity at 25°C was calculated. The resistivity value was determined using the measurement results from the middle channel.

### <Measurement of alkali metal content in resin composition>

After drying the resin composition using a hot air oven, the microwave sample pretreatment device (ETHOS1 manufactured by Milestone General, Inc.) was used for acid decomposition, and the alkali metals (lithium, sodium, and potassium) contained in the resin composition were calculated. The content of alkali metals was taken as the sum of the contents of lithium, sodium, and potassium.

### <Initial viscosity of carbon material dispersion composition>

After allowing the carbon material dispersion composition to stand in a constant temperature bath at 25°C for 1 hour or more, the viscosity of the carbon material dispersion composition was immediately measured using a B-type viscometer at a rotor rotation speed of 100 rpm. The evaluation criteria for initial viscosity were defined as ⊙ (very good) when it was 100 mPa·s or more and less than 500 mPa·s, O (good) when it was 500 mPa·s or more and less than 1000 mPa·s, △ (acceptable) when it was 1000 mPa·s or more and 2000 mPa·s or less, and × (poor) when it was more than 2000 mPa·s.

### <Time-dependent viscosity of carbon material dispersion composition>

After allowing the carbon material dispersion composition to stand in a constant temperature bath at 60°C for one week, it was cooled to 25°C, and the viscosity was immediately measured using a B-type viscometer at a rotor rotation speed of 100 rpm. The evaluation criteria for time-dependent viscosity were defined as ⊙ (very good) when it was 500 mPa·s or more and 2000 mPa·s or less, O (good) when it was more than 2000 mPa·s or more and 3000 mPa·s or less, △ (acceptable) when it was more than 3000 mPa·s or more and 6000 mPa·s or less, and × (poor) when it was more than 6000 mPa·s.

### <60-Degree specular gloss of carbon material dispersion composition>

Based on the gloss value, the dispersion degree of the material to be dispersed was evaluated in terms of the surface smoothness of the coating film.

The carbon material dispersion composition was coated on a PET (polyethylene terephthalate) film using a bar coater No. 7, dried for 5 minutes in a hot air oven at 120°C, and the 60-degree specular gloss was measured using a gloss meter (manufactured by Nippon Denshoku Industries Co., Ltd., VG7000) according to JIS Z8741 from the surface where the carbon material dispersion composition was applied. The evaluation criteria for 60-degree specular gloss were defined as ⊙ (very good) when it was 50 degrees or more and less than 80 degrees, O (good) when it was 40 degrees or more and less than 50 degrees, or 80 degrees or more and less than 90 degrees, △ (acceptable) when it was 30 degrees or more and less than 40 degrees, or 90 degrees or more, and × (poor) when it was less than 30 degrees.

### <Volume resistivity of electrode film>

A mixture slurry was applied onto an aluminum foil using an applicator so that the basis weight per unit area of the electrode was 20 mg/cm² and the coating film was then dried in an electric oven at 120°C±5°C for 25 minutes. Subsequently, the surface resistivity (Ω/□) of the dried coating film was measured using Loresta GP (MCP-T610, probe: AP2 probe (RMH333)) manufactured by Mitsubishi Chemical Analytech Co., Ltd. After measurement, the volume resistivity (Ω·cm) of the electrode film was calculated by multiplying the thickness of the electrode mixture layer formed on the aluminum foil. The thickness of the electrode mixture layer was determined using a film thickness gauge (DIGIMICRO MH-15M, manufactured by Nikon Corporation). The average of three measurement points on the electrode film was obtained, and the thickness of the aluminum foil was subtracted from this value to calculate the volume resistivity (Ω·cm) of the electrode film. The evaluation criteria for volume resistivity were defined as ⊙ (very good) when it was less than 8 Ω·cm, O (good) when it was 8 Ω·cm or more and less than 12 Ω·cm, Δ (acceptable) when it was 12 Ω·cm or more and less than 15 Ω·cm, and × (poor) when it was 15 Ω·cm or more.

### <Peeling strength of electrode film>

A mixture slurry was applied onto an aluminum foil using an applicator so that the basis weight per unit area of the electrode was 20 mg/cm² and the coating film was then dried in an electric oven at 120°C±5°C for 25 minutes. Then, the film was cut into two 90 mm×20 mm rectangles with the coating direction as the major axis. The peeling strength was measured using a desktop tensile tester (Strograph E3, manufactured by Toyo Seiki Co., Ltd.) and evaluated according to the 180 degree peeling test method. Specifically, a double-sided tape with a size of 100 mm×30 mm (No. 5,000NS, manufactured by Nitoms Inc.) was attached to a stainless steel plate, the produced battery electrode mixture layer was brought into close contact with the other surface of the double-sided tape, peeling off was performed while pulling from the bottom to the top at a certain speed (50 mm/min), and the average value of stress at this time was used as the peeling strength. The evaluation criteria for peeling strength were defined as ⊙ (very good) when it was 1.0 N/cm or more, O (good) when it was 0.7 N/cm or more and less than 1.0 N/cm, △ (acceptable) when it was 0.5 N/cm or more and less than 0.7 N/cm, and × (poor) when it was less than 0.5 N/cm.

### <Evaluation of rate characteristics of lithium ion secondary battery>

A laminate type lithium ion secondary battery was placed in a thermostatic chamber at 25°C, and charging and discharging measurement was performed using a charging and discharging device (SM-8, manufactured by Hokuto Denko Corporation). Constant current and constant voltage charging (a cutoff current of 1.0 mA (0.02C)) was performed at a charging current of 10 mA (0.2C) and a charge final voltage of 4.2 V, and constant current discharging was then performed at a discharging current of 10 mA (0.2C) and a discharge final voltage of 2.5 V. This operation was repeated three times and constant current and constant voltage charging (cutoff current (1.0 mA 0.02C)) was then performed at a charging current of 10 mA (0.2C) and a charge final voltage of 4.2 V, and constant current discharging was performed at a discharging current of 0.2C and 3C until the discharge final voltage reached 2.5 V, and each discharging capacity was determined. The rate characteristics can be expressed as a ratio between the 0.2C discharging capacity and the 3C discharging capacity according to the following Formula 2. 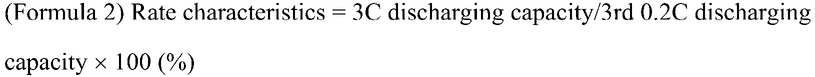 (Formula 2) Rate characteristics = 3C discharging capacity/3rd 0.2C discharging capacity × 100 (%)

The evaluation criteria for rate characteristics were defined as ⊙ (very good) when it was 80% or more, O (good) when it was 70% or more and less than 80%, △ (acceptable) when it was 60% or more and less than 70%, and × (poor) when it was less than 60%.

### <Evaluation of high-temperature cycle characteristics of lithium ion secondary battery>

A laminate type lithium ion secondary battery was placed in a thermostatic chamber at 45°C, and charging and discharging measurement was performed using a charging and discharging device (SM-8, manufactured by Hokuto Denko Corporation). Constant current and constant voltage charging (a cutoff current of 1.25 mA (0.025C)) was performed at a charging current of 50 mA (1C) and a charge final voltage of 4.2 V and constant current discharging was then performed at a discharging current of 50 mA (1C) and a discharge final voltage of 2.5 V. This operation is repeated 100 times. 1C was the current value at which the theoretical capacity of the positive electrode was discharged in 1 hour. The cycle characteristics can be expressed as a ratio between the 100th 1C discharging capacity and the 3rd 1C discharging capacity at 45°C according to the following Formula 3. 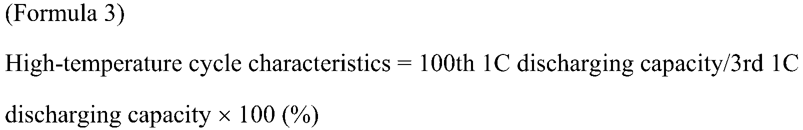 (Formula 3) High-temperature cycle characteristics = 100th 1C discharging capacity/3rd 1C discharging capacity × 100 (%)

The evaluation criteria for high-temperature cycle characteristics were defined as ⊙ (very good) when it was 90% or more, O (good) when it was 85% or more and less than 90%, △ (acceptable) when it was 80% or more and less than 85%, and × (poor) when it was less than 80%.

### (Example 1-1)

780 parts by mass of NMP was put into a reaction container including a gas inlet pipe, a thermometer, a condenser, and a stirrer, and the inside was purged with nitrogen gas. Subsequently, the reaction container was heated to 80°C, 200 parts of HNBR1 were added, and the mixture was stirred until the hydrogenated nitrile butadiene rubber was completely dissolved. Then, 20 parts by mass of the NaOH dispersion were added, and the mixture was stirred while introducing air. The reaction vessel was then heated and maintained at 80°C for 12 hours, thereby yielding the resin composition (R-1) containing the copolymer (A1), which is the copolymer (X), and an alkali metal.

Based on a total content of 100 mass% of the alkylene structural units and the nitrile group-containing structural units in the copolymer (A1), the content of the alkylene structural units accounted for 66 mass%, the content of the nitrile group-containing structural units was 34 mass%, the number-average molecular weight (Mn) was 18,000, the weight-average molecular weight (Mw) was 30,000, and the Z-average molecular weight (Mz) was 49,000.

The content of other structural units constituting the copolymer (A1) was 3 mass% or less based on 100 mass% of the copolymer (A1).

The content of the alkali metal in the resin composition was 700 ppm.

### (Examples 1-2 to 1-9) and (Comparative Examples 1-1 to 1-5 and 1-7 to 1-9)

Except for the conditions listed in Table 1, resin compositions (R-2 to R-9) and comparative resin compositions (RC-1 to RC-5, RC-7 to RC-9) containing the copolymer (X) described in Table 1 and the like were obtained by the same method as in Example 1-1.

### (Example 1-10)

The resin composition 9 produced in Example 1-9 was subjected to a 3-pass dispersion treatment using a high-pressure homogenizer (manufactured by Sugino Machine Limited, Starburst Lab). The dispersion treatment was performed at a nozzle diameter of 0.17 mm and a pressure of 150 MPa, yielding a resin composition (R-10) containing the copolymer (E2).

### (Example 1-11)

The resin composition 9 produced in Example 1-9 was subjected to a 5-pass dispersion treatment using a high-pressure homogenizer (manufactured by Sugino Machine Limited, Starburst Lab). The dispersion treatment was performed at a nozzle diameter of 0.17 mm and a pressure of 150 MPa, yielding a resin composition (R-11) containing the copolymer (E3).

### (Example 1-12)

HNBR1 was subjected to a 5-pass dispersion treatment using a high-pressure homogenizer (manufactured by Sugino Machine Limited, Starburst Lab). The dispersion treatment was performed at a nozzle diameter of 0.17 mm and a pressure of 150 MPa, yielding a resin composition (R-12) containing the copolymer (A4).

### (Comparative Example 1-6)

The comparative resin composition 5 produced in Comparative Example 1-5 was subjected to a 5-pass dispersion treatment using a high-pressure homogenizer (manufactured by Sugino Machine Limited, Starburst Lab). The dispersion treatment was performed at a nozzle diameter of 0.17 mm and a pressure of 150 MPa, yielding a resin composition (RC-6) containing the copolymer (E5).

Table 2 lists the content ratios of the alkylene structural units and the nitrile group-containing structural units based on a total content of 100 mass% of the alkylene structural units and the nitrile group-containing structural units. In all of the copolymers, the content of other structural units constituting the copolymer was 3 mass% or less based on 100 mass% of the copolymer.

### [Table 1]

**Table 1**

| Resin composition | | Copolymer | Raw materials HNBR types | NMP addition amount (parts by mass) | HNBR addition amount (parts by mass) | NaOH dispersion solution (parts by mass) | Heating time (H) | Dispersion treatment |
|---|---|---|---|---|---|---|---|---|
| Example 1-1 | R-1 | A1 | HNBR1 | 780 | 200 | 20 | 12 | None |
| Example 1-2 | R-2 | A2 | HNBR1 | 760 | 200 | 40 | 12 | None |
| Example 1-3 | R-3 | A3 | HNBR1 | 720 | 200 | 80 | 12 | None |
| Example 1-4 | R-4 | B1 | HNBR2 | 904 | 80 | 16 | 12 | None |
| Example 1-5 | R-5 | B2 | HNBR2 | 888 | 80 | 32 | 12 | None |
| Example 1-6 | R-6 | C1 | HNBR3 | 904 | 80 | 16 | 12 | None |
| Example 1-7 | R-7 | C2 | HNBR3 | 888 | 80 | 32 | 12 | None |
| Example 1-8 | R-8 | D1 | HNBR4 | 888 | 80 | 32 | 12 | None |
| Example 1-9 | R-9 | E1 | HNBR5 | 888 | 80 | 32 | 12 | None |
| Example 1-10 | R-10 | E2 | HNBR5 | 888 | 80 | 32 | 12 | 3 passes |
| Example 1-11 | R-11 | E3 | HNBR5 | 888 | 80 | 32 | 12 | 5 passes |
| Example 1-12 | R-12 | A4 | HNBR1 | 800 | 200 | 0 | 12 | 5 passes |
| Comparative Example 1-1 | RC-1 | B3 | HNBR2 | 920 | 80 | 0 | 12 | None |
| Comparative 1-2 | RC-2 | C3 | HNBR3 | 920 | 80 | 0 | 12 | None |
| Comparative Example 1-3 | RC-3 | D2 | HNBR4 | 920 | 80 | 0 | 12 | None |
| Comparative Example 1-4 | RC-4 | D3 | HNBR4 | 856 | 80 | 64 | 12 | None |
| Comparative Example 1-5 | RC-5 | E4 | HNBR5 | 920 | 80 | 0 | 12 | None |
| Comparative Example 1-6 | RC-6 | E5 | HNBR5 | 920 | 80 | 0 | 12 | 5 passes |
| Comparative Example 1-7 | RC-7 | E6 | HNBR5 | 888 | 80 | 32 | 4 | None |
| Comparative Example 1-8 | RC-8 | E7 | HNBR5 | 856 | 80 | 64 | 4 | None |
| Comparative Example 1-9 | RC-9 | E8 | HNBR5 | 856 | 80 | 64 | 12 | None |

Table 2 shows the evaluation results of the resin compositions produced in Example 1-1 to Comparative Example 1-9.

### [Table 2]

**Table 2**

| Resin composition | | Copolymer or the like | | | | | | | | Viscosity (mPa·s) | Resistivity (Ω·cm) | Alkali metal Content (ppm) |
|---|---|---|---|---|---|---|---|---|---|---|---|---|
| | | Types | Alkylene Structural units [%] | Nitrile group-containing Structural units [%] | Mn | Mw | Mz | Mw/Mn | Mz/Mw | | | |
| Example 1-1 | R-1 | A1 | 66 | 34 | 18,000 | 30,000 | 49,000 | 1.67 | 1.63 | 300 | 12,000 | 700 |
| Example 1-2 | R-2 | A2 | 67 | 33 | 17,000 | 30,000 | 49,000 | 1.76 | 1.63 | 260 | 11,500 | 1,300 |
| Example 1-3 | R-3 | A3 | 68 | 32 | 17,000 | 29,000 | 49,000 | 1.71 | 1.69 | 250 | 9,000 | 2,300 |
| Example 1-4 | R-4 | B1 | 66 | 34 | 47,000 | 105,000 | 217,000 | 2.23 | 2.07 | 210 | 17,500 | 1,500 |
| Example 1-5 | R-5 | B2 | 67 | 33 | 38,000 | 76,000 | 159,000 | 2.00 | 2.09 | 120 | 10,500 | 2,500 |
| Example 1-6 | R-6 | C1 | 66 | 34 | 48,000 | 113,000 | 231,000 | 2.35 | 2.04 | 200 | 19,000 | 1,500 |
| Example 1-7 | R-7 | C2 | 64 | 36 | 43,000 | 93,000 | 194,000 | 2.16 | 2.09 | 120 | 11,500 | 2,800 |
| Example 1-8 | R-8 | D1 | 64 | 36 | 48,000 | 102,000 | 198,000 | 2.13 | 1.94 | 400 | 12,000 | 4,000 |
| Example 1-9 | R-9 | E1 | 64 | 36 | 44,000 | 94,000 | 185,000 | 2.14 | 1.97 | 290 | 12,000 | 4,500 |
| Example 1-10 | R-10 | E2 | 64 | 36 | 40,000 | 83,000 | 157,000 | 2.08 | 1.89 | 240 | 11,500 | 4,500 |
| Example 1-11 | R-1 1 | E3 | 64 | 36 | 41,000 | 82,000 | 142,000 | 2.00 | 1.73 | 190 | 10,500 | 4,500 |
| Example 1-12 | R-12 | A4 | 66 | 34 | 17,000 | 30,000 | 49,000 | 1.76 | 1.63 | 390 | 19,000 | 80 |
| Comparative Example 1-1 | RC-1 | B3 | 66 | 34 | 48,000 | 110,000 | 210,000 | 2.29 | 1.91 | 290 | 24,500 | 40 |
| Comparative Example 1-2 | RC-2 | C3 | 64 | 36 | 53,000 | 133,000 | 270,000 | 2.51 | 2.03 | 510 | 37,000 | 30 |
| Comparative Example 1-3 | RC-3 | D2 | 64 | 36 | 75,000 | 183,000 | 364,000 | 2.44 | 1.99 | 1760 | 40,000 | 30 |
| Comparative Example 1-4 | RC-4 | D3 | 64 | 36 | 32,000 | 76,000 | 167,000 | 2.38 | 2.20 | 210 | 10,000 | 11,000 |
| Comparative Example 1-5 | RC-5 | E4 | 64 | 36 | 78,000 | 209,000 | 434,000 | 2.68 | 2.08 | 4610 | 88,000 | 10 |
| Comparative Example 1-6 | RC-6 | E5 | 64 | 36 | 74,000 | 136,000 | 214,000 | 1.84 | 1.57 | 840 | 45,000 | 10 |
| Comparative Example 1-7 | RC-7 | E6 | 64 | 36 | 69,000 | 143,000 | 275,000 | 2.07 | 1.92 | 1200 | 26,000 | 4,500 |
| Comparative Example 1-8 | RC-8 | E7 | 64 | 36 | 49,000 | 97,000 | 176,000 | 1.98 | 1.81 | 1000 | 22,000 | 12,000 |
| Comparative Example 1-9 | RC-9 | E8 | 64 | 36 | 26,000 | 59,000 | 111,000 | 2.27 | 1.88 | 150 | 10,500 | 12,000 |

### (Example 2-1)

In a stainless steel container, 87.75 parts of N-methyl-2-pyrrolidone (NMP) and 8.75 parts of resin composition (R-1) were added and the mixture was stirred using a disperser. Subsequently, 3.5 parts of carbon nanotubes (manufactured by JEIO Co., Ltd., JENOTUBE-6A) were weighed and added while stirring with a disperser. A fine emulsor screen was mounted on a high-shear mixer (L5M-A, manufactured by Silverson), and batch dispersion was carried out at 9,000 rpm until the mixture became uniform and the dispersion particle size, measured with a grind gauge, reached 200 µm or less. The mixture was then passed through a high-magnetic-force mag filter (manufactured by EISHIN Co., Ltd., surface magnetic flux density 17,000 gauss) to obtain a carbon material preliminary dispersion composition. Furthermore, the carbon material preliminary dispersion composition was sent to a bead mill (manufactured by Ashizawa Finetech Ltd, Mugen Flow (R)) filled with zirconia beads of diameter 1.0 mm, and a circulation dispersion treatment with a residence time of 10 minutes (bead filling rate 80%, peripheral speed 13 m/s) was performed. The number of circulation cycles was 50. Next, the liquid to be dispersed was supplied to a high-pressure homogenizer (manufactured by Sugino Machine Limited, Starburst Lab) and a 15-pass dispersion treatment was performed. The dispersion treatment was performed using a single nozzle chamber, with a nozzle diameter of 0.25 mm and a pressure of 100 MPa, after which the liquid to be dispersed was supplied to an electromagnet (manufactured by Dae Bo Magnetic Co., Ltd., model EMF-100S, magnetic flux density 16,000 gauss, internal volume 1.7 L, equipped with 31 grid screens each 10 cm in diameter and 1.3 cm thick) and a 3-pass treatment was performed, followed by passing through two depth filters (manufactured by 3M, PP non-woven depth cartridge NT-T series, filtration accuracy 20 µm) connected in series to obtain carbon material dispersion composition 1.

### <Examples 2-2 to 2-16, Comparative examples 2-1 to 2-9>

Except for the changes to the dispersion conditions, carbon materials, resin compositions, the addition amount of resin composition, and NMP as listed in Table 3, carbon material dispersion compositions 2 to 16 and comparative carbon material dispersion compositions 1 to 9 were obtained by the same method as in Example 2-1.

### [Table 3]

**Table 3**

| Carbon material dispersion composition | | Carbon Material | | Resin composition | | NMP | Bead Mill Dispersion Conditions | | | Homogenizer Dispersion Conditions | |
|---|---|---|---|---|---|---|---|---|---|---|---|
| | | Types | Addition amount (parts) | Types | Addition amount (parts) | Addition amount (parts) | Flow rate (m/s) | Circulation type Dispersion treatment Residence time (min) | Number of passes | Pressure (Mpa) | Number of passes |
| Example 2-1 | Dispersion composition 1 | CNT1 | 3.5 | R-1 | 8.75 | 91.25 | 13.00 | 10 | 50 | 100 | 15 |
| Example 2-2 | Dispersion composition 2 | CNT1 | 3.5 | R-2 | 8.75 | 91.25 | 13.00 | 10 | 50 | 100 | 15 |
| Example 2-3 | Dispersion composition 3 | CNT1 | 3.5 | R-3 | 8.75 | 91.25 | 13.00 | 5 | 25 | 100 | 15 |
| Example 2-4 | Dispersion composition 4 | CNT1 | 3.5 | R-3 | 8.75 | 91.25 | 13.00 | 10 | 50 | 100 | 15 |
| Example 2-5 | Dispersion composition 5 | CNT1 | 3.5 | R-3 | 8.75 | 91.25 | 13.00 | 15 | 75 | 100 | 15 |
| Example 2-6 | Dispersion composition 6 | CNT2 | 7 | R-3 | 7.00 | 93.00 | 13.00 | 10 | 50 | 100 | 15 |
| Example 2-7 | Dispersion composition 7 | CB1 | 20 | R-3 | 1000 | 90.00 | 800 | 2 | 10 | 80 | 10 |
| Example 2-8 | Dispersion composition 8 | CNT1 | 3.5 | R-4 | 21.88 | 78.13 | 13.00 | 10 | 50 | 100 | 15 |
| Example 2-9 | Dispersion composition 9 | CNT1 | 3.5 | R-5 | 21.88 | 78.13 | 13.00 | 10 | 50 | 100 | 15 |
| Example 2-10 | Dispersion composition 10 | CNT1 | 3.5 | R-6 | 21.88 | 78.13 | 13.00 | 10 | 50 | 100 | 15 |
| Example 2-11 | Dispersion Composition 11 | CNT1 | 3.5 | R-7 | 21.88 | 78.13 | 13.00 | 10 | 50 | 100 | 15 |
| Example 2-12 | Dispersion Composition 12 | CNT1 | 3.5 | R-8 | 21.88 | 78.1 3 | 13.00 | 10 | 50 | 100 | 15 |
| Example 2-13 | Dispersion Composition 13 | CNT1 | 3.5 | R-9 | 21.88 | 78.13 | 13.00 | 10 | 50 | 100 | 15 |
| Example 2-14 | Dispersion Composition 14 | CNT1 | 3.5 | R-10 | 21.88 | 78.13 | 13.00 | 10 | 50 | 100 | 15 |
| Example 2-15 | Dispersion Composition 15 | CNT1 | 3.5 | R-11 | 21.88 | 78.13 | 13.00 | 10 | 50 | 100 | 15 |
| Example 2-16 | Dispersion Composition 16 | CNT1 | 3.5 | R-12 | 8.75 | 91.25 | 13.00 | 10 | 50 | 100 | 15 |
| Comparative Example 2-1 | Comparative Dispersion Composition 1 | CNT1 | 3.5 | RC-1 | 21.88 | 78.13 | 13.00 | 10 | 50 | 100 | 15 |
| Comparative Example 2-2 | Comparative Dispersion Composition 2 | CNT1 | 3.5 | RC-2 | 21.88 | 78.1 3 | 13.00 | 10 | 50 | 100 | 15 |
| Comparative Example 2-3 | Comparative Dispersion Composition 3 | CNT1 | 3.5 | RC-3 | 21.88 | 78.13 | 13.00 | 10 | 50 | 100 | 15 |
| Comparative Example 2-4 | Comparative Dispersion Composition 4 | CNT1 | 3.5 | RC-4 | 21.88 | 78.13 | 13.00 | 10 | 50 | 100 | 15 |
| Comparative Example 2-5 | Comparative Dispersion Composition 5 | CNT1 | 3.5 | RC-5 | 21.88 | 78.13 | 13.00 | 10 | 50 | 100 | 15 |
| Comparative Example 2-6 | Comparative Dispersion Composition 6 | CNT1 | 3.5 | RC-6 | 21.88 | 78.13 | 13.00 | 10 | 50 | 100 | 15 |
| Comparative Example 2-7 | Comparative Dispersion Composition 7 | CNT1 | 3.5 | RC-7 | 21.88 | 78.13 | 13.00 | 10 | 50 | 100 | 15 |
| Comparative Example 2-8 | Comparative Dispersion Composition 8 | CNT1 | 3.5 | RC-8 | 21.88 | 78.13 | 13.00 | 10 | 50 | 100 | 15 |
| Comparative Example 2-9 | Comparative Dispersion Composition 9 | CNT1 | 3.5 | RC-9 | 21.88 | 78.13 | 13.00 | 10 | 50 | 100 | 15 |

Table 4 shows the evaluation results of the carbon material dispersion compositions produced in Examples 2-1 to 2-16 and Comparative Examples 2-1 to 2-9.

### [Table 4]

**Table 4**

| Carbon material dispersion composition | | Initial viscosity | Time-dependent viscosity | 60-degree Specular gloss |
|---|---|---|---|---|
| Example 2-1 | Dispersion composition 1 | ⊙ | ⊙ | ○ |
| Example 2-2 | Dispersion composition 2 | ⊙ | ⊙ | ⊙ |
| Example 2-3 | Dispersion composition 3 | ⊙ | ⊙ | |
| Example 2-4 | Dispersion composition 4 | ⊙ | ⊙ | ⊙ |
| Example 2-5 | Dispersion composition 5 | ⊙ | ⊙ | ⊙ |
| Example 2-6 | Dispersion composition 6 | ⊙ | ○ | ⊙ |
| Example 2-7 | Dispersion composition 7 | ⊙ | ⊙ | ⊙ |
| Example 2-8 | Dispersion composition 8 | △ | △ | △ ○ |
| Example 2-9 | Dispersion composition 9 | ○ | △ | ○ |
| Example 2-10 | Dispersion composition 10 | △ | △ | △ |
| Example 2-11 | Dispersion Composition 11 | ○ | △ | ○ |
| Example 2-12 | Dispersion Composition 12 | ○ | △ | △ |
| Example 2-13 | Dispersion Composition 13 | ○ | ○ | ○ |
| Example 2-14 | Dispersion Composition 14 | ⊙ | ⊙ | ○ |
| Example 2-15 | Dispersion Composition 15 | ⊙ | ⊙ | ○ |
| Example 2-16 | Dispersion Composition 16 | △ | △ | △ |
| Comparative Example 2-1 | Comparative Dispersion Composition 1 | △ | × | × |
| Comparative Example 2-2 | Comparative Dispersion Composition 2 | × | × | × |
| Comparative Example 2-3 | Comparative Dispersion Composition 3 | × | × | × |
| Comparative Example 2-4 | Comparative Dispersion Composition 4 | ⊙ | × | ⊙ |
| Comparative Example 2-5 | Comparative Dispersion Composition 5 | × | × | × |
| Comparative Example 2-6 | Comparative Dispersion Composition 6 | × | × | × |
| Comparative Example 2-7 | Comparative Dispersion Composition 7 | × | × | △ |
| Comparative Example 2-8 | Comparative Dispersion Composition 8 | ○ | × | ○ |
| Comparative Example 2-9 | Comparative Dispersion Composition 9 | ⊙ | × | ⊙ |

### (Example 3-1)

In a plastic container having a volume of 150 cm³, 18.8 parts by mass of an NMP solution in which 8 mass% of PVDF (polyvinylidene fluoride, manufactured by Solvay S.A., Solef #5130) was dissolved and 14.5 parts by mass of NMP were weighed out. Then, 11.4 parts by mass of the carbon material dispersion composition (carbon material dispersion composition 1) was added thereto, and the mixture was stirred at 2,000 rpm for 30 seconds using a rotation/revolution mixer (Awatori Rentaro, ARE-310). In addition, 98.1 parts by mass of the positive electrode active material (HED (R) NCM-111 1100, manufactured by BASF TODA Battery Materials LLC) was then added, and the mixture was stirred at 2,000 rpm for 2.5 minutes using a rotation/revolution mixer (Awatori Rentaro, ARE-310) to obtain a mixture slurry (mixture slurry 1).

Then, the mixture slurry (mixture slurry 1) was applied onto an aluminum foil using an applicator so that the basis weight per unit area of the electrode was 20 mg/cm² and the coating film was then dried in an electric oven at 120°C±5°C for 25 minutes to obtain an electrode film (electrode film 1). Then, the electrode film (electrode film 1) was subjected to rolling treatment using a roll press (manufactured by Sank Metal Co., Ltd., 3t hydraulic roll press) to obtain a positive electrode (positive electrode 1). The basis weight per unit area of the mixture layer was 20 mg/cm², and the density of the mixture layer after rolling treatment was set to 3.1 g/cc.

### (Examples 3-2 to 3-5, Examples 3-8 to 3-16), (Comparative Examples 3-1 to 3-9)

As described in Table 5, except for using carbon material dispersion compositions 2 to 16 and comparative carbon material dispersion compositions 1 to 9 instead of carbon material dispersion composition 1, mixture slurries 2 to 5, 8 to 16, comparative mixture slurries 1 to 9, electrode films 2 to 5 and 8 to 16, comparative electrode films 1 to 9, positive electrodes 2 to 16, and comparative positive electrodes 1 to 9 were obtained by the same method as in Example 3-1.

### (Example 3-6)

In a plastic container having a volume of 150 cm³, 18.8 parts by mass of an NMP solution in which 8 mass% of PVDF (polyvinylidene fluoride, manufactured by Solvay S.A., Solef #5130) was dissolved and 18.9 parts by mass of NMP were weighed out. Then, 7.1 parts by mass of the carbon material dispersion composition (carbon material dispersion composition 1) was added thereto, and the mixture was stirred at 2,000 rpm for 30 seconds using a rotation/revolution mixer (Awatori Rentaro, ARE-310). In addition, 98.1 parts by mass of the positive electrode active material (HED (R) NCM-111 1100, manufactured by BASF TODA Battery Materials LLC) was then added, and the mixture was stirred at 2,000 rpm for 2.5 minutes using a rotation/revolution mixer (Awatori Rentaro, ARE-310) to obtain a mixture slurry (mixture slurry 6).

Then, the mixture slurry (mixture slurry 6) was applied onto an aluminum foil using an applicator so that the basis weight per unit area of the electrode was 20 mg/cm² and the coating film was then dried in an electric oven at 120°C±5°C for 25 minutes to obtain an electrode film (electrode film 6). Then, the electrode film (electrode film 1) was subjected to rolling treatment using a roll press (manufactured by Sank Metal Co., Ltd., 3t hydraulic roll press) to obtain a positive electrode (positive electrode 6). The basis weight per unit area of the mixture layer was 20 mg/cm², and the density of the mixture layer after rolling treatment was set to 3.1 g/cc.

### (Example 3-7)

In a plastic container having a volume of 150 cm³, 18.8 parts by mass of an NMP solution in which 8 mass% of PVDF (polyvinylidene fluoride, manufactured by Solvay S.A., Solef #5130) was dissolved and 21.6 parts by mass of NMP were weighed out. Then, 5.0 parts by mass of the carbon material dispersion composition (carbon material dispersion composition 1) was added thereto, and the mixture was stirred at 2,000 rpm for 30 seconds using a rotation/revolution mixer (Awatori Rentaro, ARE-310). In addition, 97.5 parts by mass of the positive electrode active material (HED (R) NCM-111 1100, manufactured by BASF TODA Battery Materials LLC) was then added, and the mixture was stirred at 2,000 rpm for 2.5 minutes using a rotation/revolution mixer (Awatori Rentaro, ARE-310) to obtain a mixture slurry (mixture slurry 7).

Then, the mixture slurry (mixture slurry 7) was applied onto an aluminum foil using an applicator so that the basis weight per unit area of the electrode was 20 mg/cm² and the coating film was then dried in an electric oven at 120°C±5°C for 25 minutes to obtain an electrode film (electrode film 7). Then, the electrode film (electrode film 1) was subjected to rolling treatment using a roll press (manufactured by Sank Metal Co., Ltd., 3t hydraulic roll press) to obtain a positive electrode (positive electrode 6). The basis weight per unit area of the mixture layer was 20 mg/cm², and the density of the mixture layer after rolling treatment was set to 3.1 g/cc.

Table 5 shows the evaluation results of the electrode films produced in Examples 3-1 to 3-16 and Comparative Examples 3-1 to 3-9.

### [Table 5]

**Table 5**

| Electrode film | | Mixture slurry | Carbon Material Dispersion Composition | Evaluation results | |
|---|---|---|---|---|---|
| | | | | Volume resistivity | Peeling strength |
| Example 3-1 | Electrode film 1 | Mixture slurry 1 | Dispersion composition 1 | ⊙ | ⊙ |
| Example 3-2 | Electrode film 2 | Mixture slurry 2 | Dispersion composition 2 | ⊙ | ⊙ |
| Example 3-3 | Electrode film 3 | Mixture slurry 3 | Dispersion composition 3 | ○ | ○ |
| Example 3-4 | Electrode film 4 | Mixture slurry 4 | Dispersion composition 4 | ⊙ | ⊙ |
| Example 3-5 | Electrode film 5 | Mixture slurry 5 | Dispersion composition 5 | ⊙ | ⊙ |
| Example 3-6 | Electrode film 6 | Mixture slurry 6 | Dispersion composition 6 | ○ | ○ |
| Example 3-7 | Electrode film 7 | Mixture slurry 7 | Dispersion composition 7 | △ | △ |
| Example 3-8 | Electrode film 8 | Mixture slurry 8 | Dispersion composition 8 | ⊙ | ⊙ |
| Example 3-9 | Electrode film 9 | Mixture slurry 9 | Dispersion composition 9 | ⊙ | ○ |
| Example 3-10 | Electrode film 10 | Mixture slurry 10 | Dispersion composition 10 | ○ | ⊙ |
| Example 3-11 | Electrode film 11 | Mixture slurry 11 | Dispersion Composition 11 | ⊙ | ○ |
| Example 3-12 | Electrode film 12 | Mixture slurry 12 | Dispersion Composition 12 | ○ | ○ |
| Example 3-13 | Electrode film 13 | Mixture slurry 13 | Dispersion Composition 13 | ○ | ○ |
| Example 3-14 | Electrode film 14 | Mixture slurry 14 | Dispersion Composition 14 | ⊙ | ○ |
| Example 3-15 | Electrode film 15 | Mixture slurry 15 | Dispersion Composition 15 | ⊙ | ○ |
| Example 3-16 | Electrode film 16 | Mixture slurry 16 | Dispersion Composition 16 | △ | ○ |
| Comparative Example 3-1 | Comparative Electrode Film 1 | Comparative Mixture slurry 1 | Comparative Dispersion Composition 1 | × | ○ |
| Comparative Example 3-2 | Comparative Electrode Film 2 | Comparative Mixture slurry 2 | Comparative Dispersion Composition 2 | × | ○ |
| Comparative Example 3-3 | Comparative Electrode Film 3 | Comparative Mixture slurry 3 | Comparative Dispersion Composition 3 | × | ○ |
| Comparative Example 3-4 | Comparative Electrode Film 4 | Comparative Mixture slurry 4 | Comparative Dispersion Composition 4 | ○ | × |
| Comparative Example 3-5 | Comparative Electrode Film 5 | Comparative Mixture slurry 5 | Comparative Dispersion Composition 5 | × | ○ |
| Comparative Example 3-6 | Comparative Electrode Film 6 | Comparative Mixture slurry 6 | Comparative Dispersion Composition 6 | × | ○ |
| Comparative Example 3-7 | Comparative Electrode Film 7 | Comparative Mixture slurry 7 | Comparative Dispersion Composition 7 | × | ○ |
| Comparative Example 3-8 | Comparative Electrode Film 8 | Comparative Mixture slurry 8 | Comparative Dispersion Composition 8 | ○ | × |
| Comparative Example 3-9 | Comparative Electrode Film 9 | Comparative Mixture slurry 9 | Comparative Dispersion Composition 9 | ○ | × |

### (Example 4-1)

The positive electrode (positive electrode 1) and the standard negative electrode were punched out into 45 mm×40 mm, and 50 mm×45 mm, respectively, and a separator (porous polypropylene film) inserted therebetween was inserted into an aluminum laminated bag and dried in an electric oven at 60°C for 1 hour. Then, 2 mL of an electrolytic solution (a nonaqueous electrolytic solution obtained by preparing a mixed solvent obtained by mixing ethylene carbonate, ethyl methyl carbonate and dimethyl carbonate at a ratio of 1 : 1 : 1 (volume ratio), additionally adding 2 parts by mass of vinylene carbonate (VC) as an additive with respect to 100 parts by mass of the mixed solvent and then dissolving LiPF₆ at a concentration of 1 M) was injected into a glove box filled with argon gas, and the aluminum laminate was then sealed to produce a laminate type lithium ion secondary battery (secondary battery 1).

### (Examples 4-2 to 4-16) and (Comparative Examples 4-1 to 4-9)

Except for the change to the positive electrode shown in Table 6, laminate-type lithium-ion secondary batteries (secondary battery 2 to comparative secondary battery 9) were produced in the same manner as the laminate-type lithium ion secondary battery (secondary battery 1).

### [Table 6]

**Table 6**

| Secondary battery | | Positive Electrode | Evaluation results | |
|---|---|---|---|---|
| | | | Rate characteristics | High temperature Cycle characteristics |
| Example 4-1 | Secondary Battery 1 | Positive Electrode 1 | ⊙ | ⊙ |
| Example 4-2 | Secondary Battery 2 | Positive Electrode 2 | ⊙ | ⊙ |
| Example 4-3 | Secondary Battery 3 | Positive Electrode 3 | ⊙ | ○ |
| Example 4-4 | Secondary Battery 4 | Positive Electrode 4 | ⊙ | ⊙ |
| Example 4-5 | Secondary Battery 5 | Positive Electrode 5 | ⊙ | ⊙ |
| Example 4-6 | Secondary Battery 6 | Positive Electrode 6 | ○ | ○ |
| Example 4-7 | Secondary Battery 7 | Positive Electrode 7 | △ | ○ |
| Example 4-8 | Secondary Battery 8 | Positive Electrode 8 | ⊙ | ⊙ |
| Example 4-9 | Secondary Battery 9 | Positive Electrode 9 | ⊙ | ⊙ |
| Example 4-10 | Secondary Battery 10 | Positive Electrode 10 | ○ | ⊙ |
| Example 4-11 | Secondary Battery 11 | Positive Electrode 11 | ○ | ○ |
| Example 4-12 | Secondary Battery 12 | Positive Electrode 12 | △ | ○ |
| Example 4-13 | Secondary Battery 13 | Positive Electrode 13 | △ | ○ |
| Example 4-14 | Secondary Battery 14 | Positive Electrode 14 | ⊙ | ○ |
| Example 4-15 | Secondary Battery 15 | Positive Electrode 15 | ⊙ | ○ |
| Example 4-16 | Secondary Battery 16 | Positive Electrode 16 | △ | △ |
| Comparative Example 4-1 | Comparative Secondary Battery 1 | Comparative Positive Electrode 1 | × | △ |
| Comparative Example 4-2 | Comparative Secondary Battery 2 | Comparative Positive Electrode 2 | × | × |
| Comparative Example 4-3 | Comparative Secondary Battery 3 | Comparative Positive Electrode 3 | × | × |
| Comparative Example 4-4 | Comparative Secondary Battery 4 | Comparative Positive Electrode 4 | △ | × |
| Comparative Example 4-5 | Comparative Secondary Battery 5 | Comparative Positive Electrode 5 | × | × |
| Comparative Example 4-6 | Comparative Secondary Battery 6 | Comparative Positive Electrode 6 | × | × |
| Comparative Example 4-7 | Comparative Secondary Battery 7 | Comparative Positive Electrode 7 | × | △ |
| Comparative Example 4-8 | Comparative Secondary Battery 8 | Comparative Positive Electrode 8 | ○ | × |
| Comparative Example 4-9 | Comparative Secondary Battery 9 | Comparative Positive Electrode 9 | ○ | × |

In the above examples, a resin composition containing a copolymer (X) and an alkali metal in an amount of 50 ppm or more and less than 10,000 ppm was used, where the resistivity when the content of the copolymer was 8 mass% with N-methyl-2-pyrrolidone was between 5,000 Ω·cm or more and 25,000 Ω·cm or less. In the examples, compared to the comparative examples, a lithium ion secondary battery with excellent time-dependent viscosity stability of the carbon material dispersion composition and excellent secondary battery characteristics, particularly high-temperature cycle characteristics, was obtained. Therefore, it can be clearly understood that the present disclosure can provide a lithium ion secondary battery having a high capacity, high output and high durability that cannot be realized with conventional carbon material dispersion compositions.

Vehicles containing the lithium ion secondary battery of the present disclosure have high charge and discharge performance and excellent high-temperature cycle characteristics, resulting in vehicles with high safety and improved fuel efficiency.

While the present invention has been described above with reference to the embodiments, the present invention is not limited to the above description. For the configuration and details of the present invention, various changes that can be understood by those skilled in the art can be made within the scope of the invention.

Although the present invention has been described with reference to several embodiments described above, it is not limited to the above several embodiments. Various changes can be made to the configuration and details of the present invention within the scope of the present invention.

The disclosure of the present application relates to the subject matter described in Japanese Patent Application No. 2023-221779 filed on December 27, 2023, the entire disclosure of which is incorporated herein by reference.

## Claims

1. A resin composition, comprising:
a copolymer (X) comprising an alkylene structural unit and a nitrile group-containing structural unit; and
an alkali metal,
wherein a content of the alkali metal is 50 ppm or more and less than 10,000 ppm, and
the resin composition has a resistivity of 5,000 Ω·cm or more and 25,000 Ω·cm or less when a non-volatile content is 8 mass% with N-methyl-2-pyrrolidone.

2. The resin composition according to claim 1, wherein a Z-average molecular weight of the copolymer (X) is 20,000 or more and 200,000 or less.

3. The resin composition according to claim 1, wherein a ratio (Mz/Mw) of a Z-average molecular weight (Mz) to a weight-average molecular weight (Mw) of the copolymer (X) is 2.0 or less.

4. A carbon material dispersion composition comprising the resin composition according to any one of claims 1 to 3 and a carbon material.

5. A mixture slurry comprising the carbon material dispersion composition according to claim 4 and an active material.

6. An electrode film formed by coating the mixture slurry according to claim 5.

7. A secondary battery comprising an electrode having the electrode film according to claim 6 and an electrolyte.

8. A vehicle comprising the secondary battery according to claim 7.
